(19) **Europäisches Patentamt**

**European Patent Office**

**Office européen des brevets**

(11) **EP 0 765 704 B1**

(12) **EUROPEAN PATENT SPECIFICATION**

(45) Date of publication and mention
of the grant of the patent:
**17.04.2002   Bulletin 2002/16**

(51) Int Cl.⁷: **B22F 3/22**, B22F 3/10

(21) Application number: **96115421.8**

(22) Date of filing: **26.09.1996**

(54) **Method and apparatus for making sintered porous metal plate**

Verfahren und Vorrichtung zur Herstellung von porösen Metallplatten

Procédé et installation de fabrication de plaques métalliques poreuses

(84) Designated Contracting States:
**CH DE FR GB IT LI NL SE**

(30) Priority: **27.09.1995 JP 24989995**
**20.10.1995 JP 27249995**
**25.10.1995 JP 27747195**
**20.11.1995 JP 30140495**
**20.05.1996 JP 12432496**
**20.05.1996 JP 12428496**
**20.05.1996 JP 12428596**

(43) Date of publication of application:
**02.04.1997   Bulletin 1997/14**

(73) Proprietor: **MITSUBISHI MATERIALS**
**CORPORATION**
**Chiyoda-ku, Tokyo (JP)**

(72) Inventors:
• **Hoshino, Koji**
**Omiya, Saitama 330 (JP)**
• **Mayuzumi, Yoshitaka**
**Omiya, Saitama 330 (JP)**
• **Kohno, Toru**
**Omiya, Saitama 330 (JP)**

(74) Representative:
**Gille Hrabal Struck Neidlein Prop Roos**
**Patentanwälte**
**Brucknerstrasse 20**
**40593 Düsseldorf (DE)**

(56) References cited:
**EP-A- 0 246 844**         **EP-A- 0 764 489**
**JP-A- 26 493 095**        **US-A- 4 839 121**
**US-A- 5 132 080**         **US-A- 5 213 612**
**US-A- 5 312 580**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

**Description**

BACKGROUND OF THE INVENTION

1. Field of the Invention

The present invention relates to methods and apparatuses for making sintered porous'metal plates used for filters, substrates of electrodes of secondary batteries, and the like.

2. Description of the Related Art

Porous metal plates comprising a three-dimensional network backbone and having a high porosity are used for electrodes of batteries, various filters, and catalytic carriers.

Prior art methods for making such porous metal plates include; a method in which a conductive polyurethane foam after plating was burned (Japanese Unexamined Patent 4-2759); a method in which metal powder is adhered to an urethane foam coated with an adhesive and they are burned (Japanese Unexamined Patent 3-188203); and a method in which a metal having a low melting point is injected with pressure into a container containing fine water-soluble crystalline powder, and the water-soluble crystalline powder was removed by washing with water after the metal is solidified (Japanese Unexamined Patent 59-1651).

However, the method based on plating, set forth in Japanese Unexamined Patent 4-2759, has a restricted metal composition and thus its use is limited. Further, in both the method of the first and the second related art, a hollow skeleton forms because of burn-off of the resin, resulting in the decrease in the effective spatial volume. Moreover, in the method disclosed in Japanese Unexamined Patent 59-1651, a porous structure having a pore size of less than 100 μm can be barely obtained, and thus the resulting porous article has a smaller specific surface area.

Document US-A-5 213 612 discloses the production of a porous metal plate by a method comprising the steps of preparing a foamable slurry; shaping it, foaming and drying.

SUMMARY OF THE INVENTION

It is an object of the present invention to provide a method and apparatus for making a sintered porous metal plate having a large degree of freedom on the metal composition and a large specific surface area.

It is another object of the present invention to provide a method and apparatus for making an unsintered metal foam, as an intermediate product of the sintered porous metal plate.

In accordance with a first aspect of the present invention, a method for making a porous metal plate is defined in claim 1 and comprises the steps of: a slurry preparation step for preparing a foamable slurry containing metal powder; a shaping step for shaping the foamable slurry into a plate article; a foaming step for foaming the plate article; and a drying step for drying the plate article after foaming.

The foamable slurry may comprise metal powder, an foaming agent, a water-soluble resinous binder, and a surfactant.

Preferably, the method further comprises a burning step for degreasing the dried plate article after the drying step.

The burning step may include a step for sintering the plate article.

Preferably, the foamable slurry is shaped by a doctor blade method in the shaping step. The doctor blade method uses two doctor blades which are separated from each other at a predetermined space.

In the slurry preparation step, a first aqueous solution containing a foaming agent, a surfactant and a water-soluble resinous binder, and a second aqueous solution containing metal powder and a water-soluble resinous binder are separately prepared, and the first aqueous solution and the second aqueous solution are mixed to prepare the foamable slurry just before the shaping step.

In the foaming step, the foaming agent contained in the foamable slurry is foamed under a high humidity of 65% or more.

The drying step is a far infrared irradiation drying step.

Preferably, the shaping step performs shaping of the foamable plate article on a carrier sheet.

Prior to the shaping step, a releasing film which can burn off in the burning step is preliminarily provided on the carrier sheet. Specifically, the releasing film comprises a polyurethane resin.

In accordance with the second aspect of the present invention, an apparatus for making a sintered porous metal plate is defined in claim 10 and comprises a slurry preparation means for preparing a foamable slurry containing at least metal powder, a foaming agent and a liquid medium; a shaping means for shaping the foamable slurry fed from the slurry preparation means into a plate article; a foaming means for foaming the plate article of the foamable slurry;

and a drying means for drying the cellular article; wherein these means are integrated in series by a transfer means.

The transfer means comprises a continuous carrier sheet.

Preferably, a degreasing means is provided after the drying means for degreasing the dried plate article. More preferably, the degreasing means has a carrier sheet.

A proper sintering means can be provided after the degreasing means for sintering the degreased plate article.

Preferably, the shaping means comprises a doctor blade means. The doctor blade means comprises two doctor blades.

Preferably the slurry preparation means comprises a first aqueous solution mixing means for mixing a first aqueous solution containing the foaming agent, the surfactant, and the aqueous resinous binder, and a second aqueous solution mixing means for mixing a second aqueous solution containing the metal powder and the aqueous resinous binder isolated from the first aqueous solution mixing means, and a third mixing means for preparing the foamable slurry by mixing the first aqueous solution and the second aqueous solution just before performing the shaping step.

The foaming means comprises a means for maintaining an atmosphere having a humidity of 65% or more.

The shaping means comprises a slurry reservoir for holding the foamable slurry fed from the slurry preparation means for a short time, and an atomizing means of the liquid medium to prevent the surface of the foamable slurry from drying.

The foaming means comprises an oven having an inlet and an outlet surrounding the carriage path of the transfer means, a water reservoir with a thermostat provided in the oven, a heater for heating the shaped article provided along the carriage path in the oven, and an anti-sweating heater provided on the oven inside wall.

The drying means comprises a far infrared irradiating means.

A releasing agent coating means is provided in front of the shaping means for forming a releasing agent film on the transfer means. The releasing agent coating means comprises a doctor blade machine and a releasing agent drying machine.

The proper sintering means comprises a tunnel oven and a carrying member for continuously carrying the degreased plate article from the inlet to the outlet of the tunnel oven; and the carrying member comprises a plurality of carriage rollers rotating in the carriage direction in at least a part of the tunnel oven. The carriage rollers is controlled so that the rotation rate gradually decreases along the carriage direction.

BRIEF DESCRIPTION OF THE DRAWINGS.

Other features and advantages of the invention will be apparent from the following description taken in connection with the accompanying drawing wherein:

Fig. 1 is a cross-section view of an apparatus for making an unsintered metal foam as an intermediate of a sintered porous metal plate in accordance with a first embodiment of the present invention;

Fig. 2 is a flow chart illustrating a method for making the unsintered metal foam in the first embodiment;

Fig. 3 is a cross-section view of the main portion of a doctor blade having two blades shown in Fig. 1;

Fig. 4 is a cross-section view for illustrating the operation of the doctor blade shown in Fig. 3;

Figs. 5A through 5E are outlined cross-section views schematically illustrating a foaming state at a high humidity condition;

Figs. 6A through 6E are outlined cross-section views schematically illustrating a foaming state at a low humidity condition;

Fig. 7 is a cross-section view of the main section of the foaming apparatus in accordance with the present invention;

Fig. 8 is a cross-section view of the main section of the drying machine in accordance with the present invention;

Figs. 9A through 9D are outlined cross-section views schematically illustrating cellular structures of sintered porous metal obtained by a method in accordance with the present invention;

Fig. 10 is an outlined cross-section view illustrating an apparatus for making a foamable slurry of a second embodiment in accordance with the present invention and for making a composite material of a fourth embodiment in accordance with the present invention;

Fig. 11 is a cross-section view schematically illustrating the construction of a slurry chamber of the fourth embodiment in accordance with the present invention;

Fig. 12 is a flow chart illustrating a method for making a sintered porous metal plate of a fifth embodiment in accordance with the present invention; and

Fig. 13 is a cross-section view illustrating an apparatus for performing the method for making the sintered porous metal plate of the fifth embodiment in accordance with the present invention which is shown in Fig. 12.

## EP 0 765 704 B1

DESCRIPTION OF THE PREFERRED EMBODIMENT

In accordance with the present invention, a sintered porous metal plate is produced, and an unsintered metal foam also is produced as an intermediate product of the sintered porous metal plate.

First Embodiment

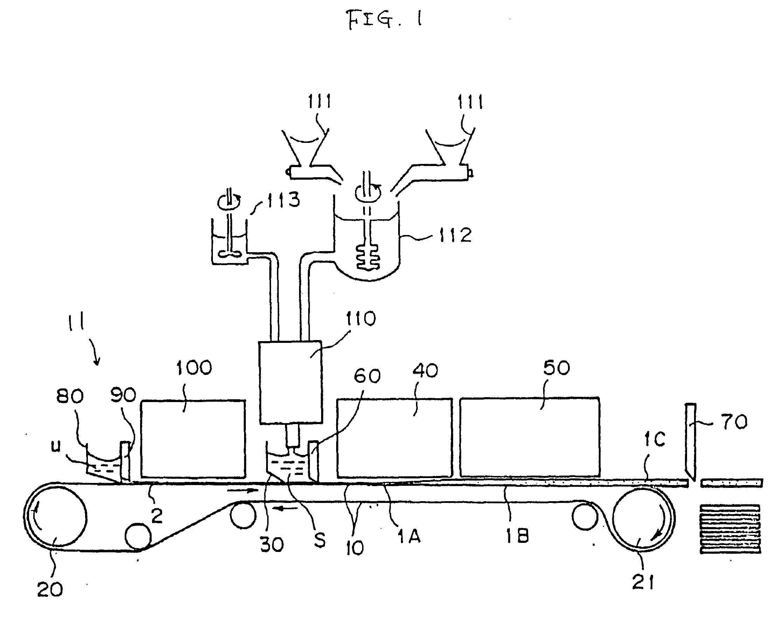

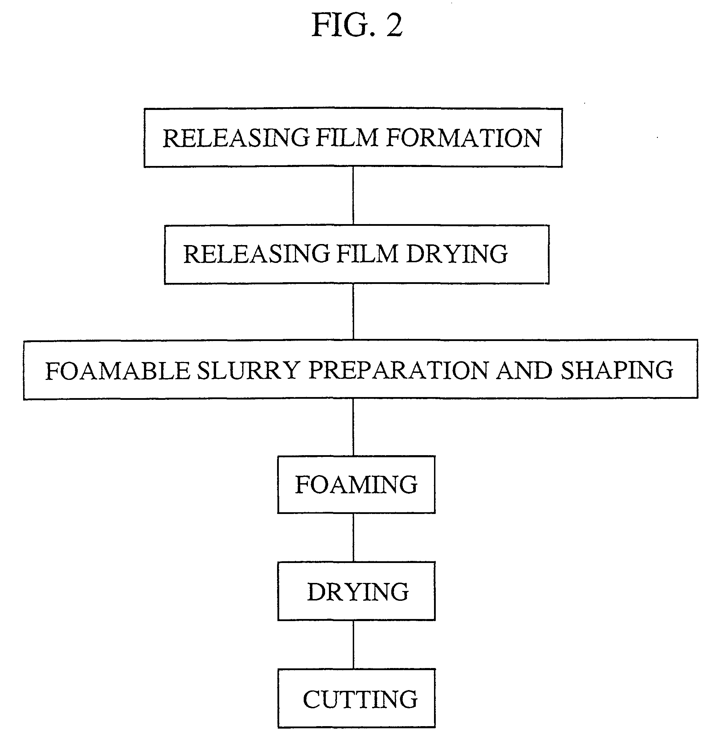

As a first embodiment in accordance with the present invention, the production of an unsintered metal foam (or green sheet as an intermediate of a sintered porous metal plate will be explained. Fig. 1 is a cross-section view of an apparatus for making an unsintered metal foam in accordance with the first embodiment of the present invention, and Fig. 2 is a flow chart illustrating a production process of the unsintered metal foam in accordance with the first embodiment.

As shown in Fig. 1, the apparatus for making the unsintered metal foam comprises a releasing agent film preparation and drying section, a foamable slurry preparing section, a foaming section, a drying section, and a cutting section. The unsintered metal foam is produced by the method illustrated in the flow chart in Fig. 2. That is, the unsintered metal foam is produced by through a releasing agent film preparing step, a releasing agent drying step, a foamable slurry preparation step, a shaping step, a foaming step, a drying step and a cutting step.

The apparatus for making the unsintered metal foam shown in Fig. 1 operates in accordance with the method shown in Fig. 2. The apparatus is provided with a first roll 20 and a second roll 21 between which a carrier sheet 10 is loaded. The carrier sheet 10 acts as a belt conveyer by moving between the first roll 20 and the second rolls 21. From the first roll 20 toward the second roll 21, the apparatus is provided with a releasing agent reservoir 80, a releasing agent drying machine 100, a slurry reservoir 30, a high temperature humidifier 40 for foaming, and a drying machine 50. The releasing agent reservoir 80 is rectangular parallelepiped and comes in contact with the upper face of the carrier sheet 10 near the first roll 20. The releasing agent reservoir 80 has a doctor blade 90 on the right wall. The doctor blade 90 is provided so that the gap with the carrier sheet 10 is adjustable. In such a way, the releasing agent reservoir 80 and the doctor blade 90 form a doctor blade machine 11.

Each step of the method shown in Fig. 2 will be explained with reference to each section of the apparatus shown in Fig. 1.

Releasing Agent Film Preparation and Drying

When the releasing agent reservoir 80 is filled with a releasing coating material u prepared from an urethan resin and the carrier sheet 10 moves, the releasing coating material u is extruded from the gap between the doctor blade 90 and the carrier sheet 10 to form a coating film 2 having a given thickness. The coating film 2 with the carrier sheet 10 moves to the following releasing agent drying machine 100 to dry and solidify the coating material. The thickness of the releasing agent film 2 can be adjusted by the gap between the doctor blade 90 and the carrier sheet 10.

The releasing agent drying machine 100 dries and solidifies the releasing agent film 2 formed on the carrier sheet 10. Preferable examples of the releasing agent drying machine include a hot-air drying machine and a far infrared drying machine. The releasing agent film 2 helps the stripping of the green sheet from the carrier sheet. The releasing agent film 2 can be removed by burning in the sintering step of the green sheet. Further, the releasing agent film 2 can be used as a carrier tape for the green sheet.

The dry green sheet 1C can be readily treated by the formation of the releasing agent film 2, as set forth below. Thus, the urethane coating film preparation step and the drying step are not always necessary for the present invention.

Foamable Slurry Preparation Step and Shaping Step

In the foamable slurry preparation step, a slurry containing metal powder, a water-soluble resinous binder, a foaming agent, a surfactant, water and the like is prepared.

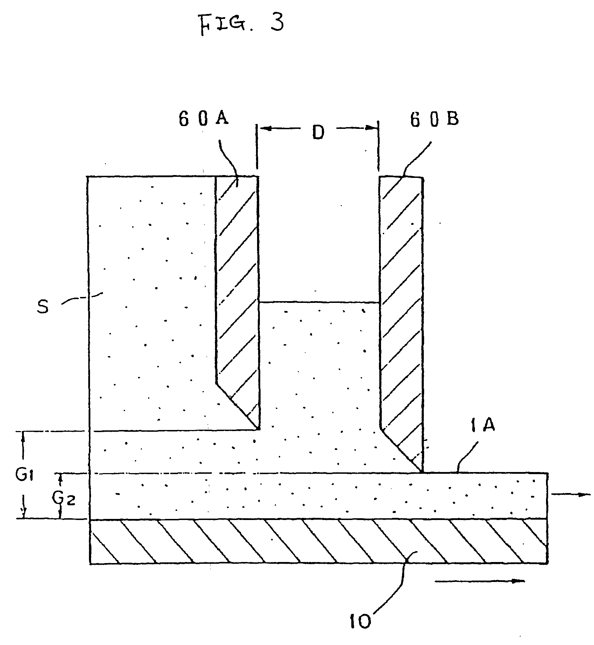

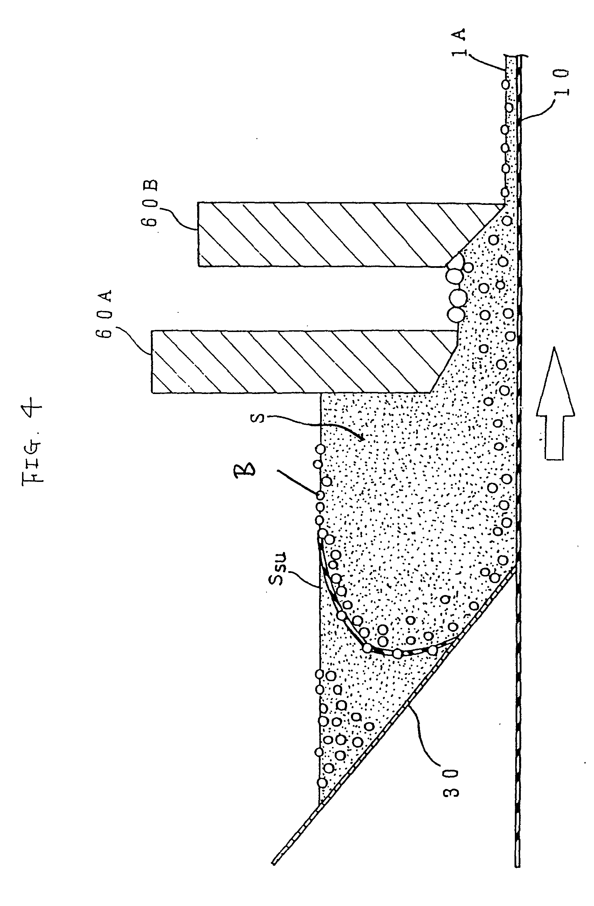

In the shaping step, the resulting foamable slurry is shaped into a plate. A preferred shaping method is a doctor blade method which will be explained later with reference to Figs. 3 and 4.

Although the foamable slurry preparation step and the following shaping step are considered to be an integrated step , these will be explained below as independent steps each other.

A. Foamable Slurry Preparation Step

A slurry reservoir 30 is a rectangular parallelepiped provided so as to come in contact with the upper face of the carrier sheet ahead of the releasing agent drying machine 100. Above the slurry reservoir 30, a foamable slurry mixer 110 is provided for preparing a foamable slurry S which will be fed to the slurry reservoir 30. The foamable slurry mixer 110 is provided with a kneader 112 for kneading raw materials fed from a plurality of hoppers 111, and foaming agent mixing equipment 113 for mixing a foaming agent. The foamable slurry mixer 110 mixes the raw materials kneaded by the kneader 112 with foaming agent after mixing in the foaming agent mixing equipment 113 to prepare a foamable slurry S. Since components of the foamable slurry are divided into two liquids and the two liquids are mixed just before the mixture is fed to the doctor blade 60, the volatilization of the foaming agent can be prevented.

The wall of the slurry reservoir 30 downstream of the carriage direction of the carrier has a doctor blade 60. The gap between the doctor blade 60 and the carrier sheet 10 is adjusted to prepare the green sheet 1A having a desirable thickness. When the slurry reservoir 30 is filled with the foamable slurry S while moving the carrier sheet, the foamable slurry S is extruded from the gap between the doctor blade 60 and the carrier sheet 10 to shape a plate article having a given thickness. The shaped plate article 1A moves on the carrier sheet 10 toward the following humidifier with heat for foaming

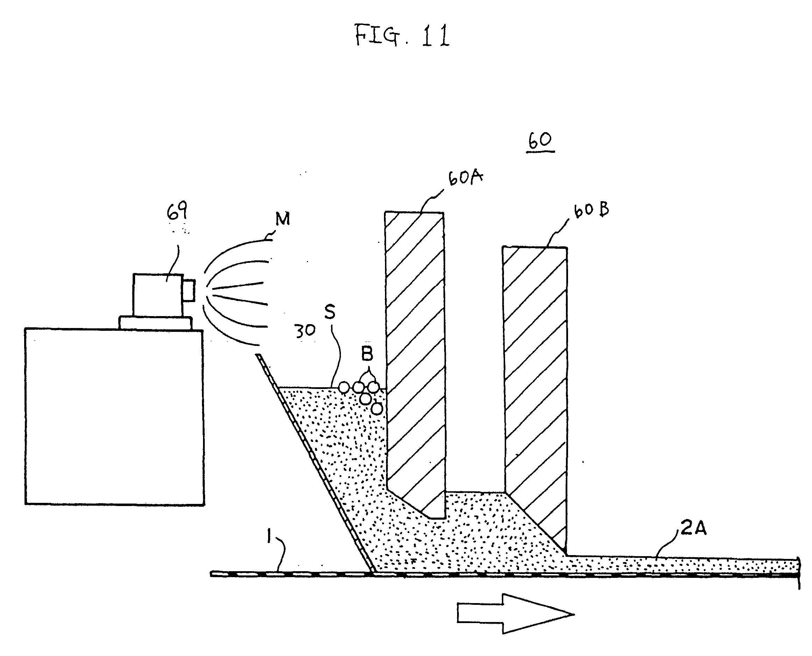

The slurry reservoir 30 is preferably provided with a mechanism for atomizing a liquid medium onto the surface of the reserved slurry S by the following reason. When the foamable slurry S is supplied into the reservoir, air bubbles B are caught into the inside of the slurry along with the original slurry surface Ssu as shown in Fig. 4. If the shaped plate article of the foamable slurry includes such air bubbles, unexpected pores based on the air bubbles will be formed in the porous metal plate. Since the pores from the air bubbles has a different pore size from pores formed by the foaming agent, the porous metal plate has a nonuniform cellular structure. The air bubbles B are significantly caught when the surface of the slurry S in the reservoir is dried, because the viscosity increases at the surface and thus the air bubbles are extremely barely released. In contrast, when the liquid medium is atomized on the surface of the slurry as shown in Fig. 11, the surface in the reservoir is not dried, and thus the nonuniform cellular structure in the porous metal plate can be prevented. The liquid medium may be atomized continuously or interrupted so long as the drying of the slurry surface is prevented.

The metal powder for forming the unsintered metal foam in the present invention can be appropriately selected depending on the objects of the final product. When the metal foam is used for electrodes, examples of the metal powder include powders of sintering metals or alloys, such as nickel, copper, iron, stainless steels, chromium, cobalt, gold and silver. The average particle size of the metal powder is preferably 500 μm or less, and more preferably 0.5 to 100 μm. When the average particle size is 0.5 μm or less, the porosity ratio will be too small. On the other hand, when the average particle size is 500 μm or more, the sintered porous metal plate, obtained by sintering the unsintered metal foam, will not have a sufficient strength. The content of the metal powder in the slurry ranges 5 to 80 percent (percent by weight, hereinafter the same), and more preferably 30 to 80 percent.

The water-soluble resinous binder maintains the shape of the porous article after the drying step. The water-soluble resinous binder also acts as a viscosity modifier of the slurry. Examples of the water-soluble resinous binder include methyl cellulose, hydroxypropylmethyl cellulose, hydroxyethyl cellulose, carboxymethyl cellulose ammonium, ethyl cellulose, and polyvinyl alcohol. The content of the water-soluble resinous binder preferably ranges 0.5 to 20 percent and more preferably 2 to 10 percent. When the content is 0.5 percent or less, the dry metal article has a strength not sufficient to the treatment. On the other hand, when the content is 20 percent or more, the viscosity is too high to obtain the shaped article.

Any foaming agents capable of forming pores due to gas releasing, e.g. compounds which release gas by the decomposition at a predetermined temperature, and volatile organic solvents, can be used. Examples of volatile organic solvents include hydrocarbon organic solvents having 5 to 8 carbon atoms. These organic solvents are liquid at room temperature, and form micelles in the slurry in the presence of the surfactant. The organic solvents vaporize at room temperature and by heating to form fine bubbles in the slurry. Examples of hydrocarbon organic solvent having 5 to 8 carbon atoms include pentane, neopentane, hexane, isohexane, heptane, isoheptane, benzene, octane, and toluene. The content of the foaming agent ranges preferably 0.05 to 10 percent, and more preferably 0.5 to 5 percent. A content of less than 0.05 percent does not form bubbles in an amount sufficient to a predetermined porosity. On the other hand, a content of more than 5 percent causes the formation of micelles having a larger size and thus the formation of larger bubbles, resulting in the decrease in strengths of the shaped article and sintered foam.

The surfactant stabilizes the foaming state and forms the micelles of the foaming agent. Examples of the surfactant include anionic surfactants, such as alkylbenzenesulfonate, α-olefinesulfonate, salts of alkyl sulfuric acid ester, salts of alkylether sulfuric acid ester and alkane sulfonic acid salts; and nonionic surfactants, such as polyethylene glycol derivatives and polyvalent alcohol derivatives. The content of the surfactant ranges 0.05 to 5 percent and preferably 0.5 to 3 percent. The micelle formation is unstable in an amount of less than 0.05 percent, and thus fine bubbles are barely held in the slurry. On the other hand, the content exceeding 5% does not enhance the effects set forth above.

The foamable slurry in accordance with the present invention can contain a plasticizer, a combustible substance and the like, other than the essential components set forth above.

The plasticizer is added to endow the unsintered porous metal member with plasticity. Examples of the plasticizer include polyvalent alcohols, such as ethylene glycol, polyethylene glycol and glycerin; oils, such as sardine oil, rape seed oil and olive oil; ethers such as petroleum ether; and esters, such as diethyl phthalate, n-butyl phthalate, diethylhexyl phthalate, dioctyl phthalate, sorbitan monooleate, sorbitan trioleate, sorbitan palmitate, and sorbitan stearate. The content of the plasticizer ranges preferably 0.1 to 15 percent and more preferably 2 to 10 percent. A content of less than 0.1 percent does not cause sufficient plasticizing effects, whereas a content over 15 percent does not cause a satisfactory strength of the shaped article. Preferable plasticizer are polyethylene glycol and glycerin. These plasticizers can improve the porosity of the shaped article.

The combustible substance promotes pore formation by burning during the burning step of the dry shaped article. Any powder and fibrous combustible substances can be used. In detail, powder of approximately 0.1 to 200 μm and fiber having a length of 200 μm or less and preferably 30 to 120 μm are used. Examples of combustible substance include pulp, cotton, waste thread, corn starch, carboxymethyl cellulose, water-insoluble cellulose fibers, polyvinyl butyral resins, polyvinyl resins, acrylic resins, and polyethylene resins.

The foamable slurry in accordance with the present invention can be obtained by mixing the components set forth above. Although the order of the mixing is not limited, it is preferred that the foaming agent is finally added to reduce bubble formation in the mixing step. After foaming of the slurry, the fluidity of the slurry decreases and that results in poor shaping characteristics. However, the time until foaming starts after the foaming agent is added can be controlled by the kind and amount of the foaming agent and the temperature of the slurry. Thus, by optimizing such parameters, the slurry can be shaped into an unsintered porous metal member having a predetermined shape within a time the slurry still has fluidity. The viscosity of the slurry is preferably 20,000 cps to 70,000 cps and more preferably 30,000 to 55,000 cps. When the viscosity at a temperature of 20 °C is lower than 20,000 cps, the cellular structure will be destroyed during drying. On the other hand, when the viscosity is higher than 70,000 cps, the shaping characteristics may be poor because of the high viscosity.

B. Shaping Step

The foamable slurry prepared in the above-mentioned steps is shaped into a plate. A suitable shaping method is a doctor blade method.

Figs. 3 and 4 are cross-section views of the main section of a doctor blade with two blades in accordance with the embodiment of the present invention.

The doctor blade unit is provided with the first roll 20 with a wound carrier sheet 10 and the second roll 21 for winding up the carrier sheet 10 (these rolls are not shown in Figs. 3 and 4). The doctor blade 60 is connected with the right wall of the slurry reservoir 30, downstream of the carriage direction of the carrier sheet, and an adjustable gap is provided between the doctor blade 60 and the carrier sheet 10. The thickness of the shaped article is adjusted by the gap between them. When the slurry 30 is filled with the foamable slurry while moving the carrier sheet 10, the foamable slurry S is extruded from the gap to shape a plate article 1A having a predetermined thickness. The plate article 1A moves to the next foaming zone 40 on the carrier sheet 10.

As shown in Figs. 3 and 4, by using two blades 60A and 60B as the doctor blade 60, large bubbles are released from the space between two blades 60A, 60B. Thus, the plate article 1A shoved out from the gap between the second blade 60B and the carrier sheet 10 contains no large bubbles, and the thickness of the plate article 1A can be uniformed, regardless of the amount of the foamable slurry S. It is preferable that the gap G1 between the first blade 60A and the carrier sheet 10 is larger than the gap G2 between the second blade 60B and the carrier sheet 10. Preferably, the distance D between the first blade 60A and the second blade 60B is approximately 5 to 20 mm. The gap G2 between the second blade 60B and the carrier sheet 10 is preferably 0.2 to 2 mm.

Foaming step

The shaped article is sufficiently foamed before drying. When the shaped article is dried immediately after the shaping step, the surface of the shaped article is first dried to form a skin, and the foaming and the evaporation of water are inhibited inside the shaped article. Accordingly, the foaming step is provided between the shaping step and the drying step in order to achieve uniform foaming.

When the shaped article is dried during foaming, cracks readily form on the surface of the shaped article. Therefore, the foaming is carried out in a high humid atmosphere to prevent the dryness of the shaped article. For example, when the slurry viscosity is 35,000 cps or more, the humidity is at least 65 percent, and preferably at least 80 percent. Cracks may form on the surface of the shaped article at a humidity of less than 65 percent. The foaming temperature preferably ranges from 15 to 65 °C, and more preferably from 28 to 40 °C. A much time, for example 2 hours, is required for foaming at a temperature of less than 15 °C. At a temperature over 65 °C, the shaped article is excessively foamed, occasionally resulting in breakage of the shaped article. The shaping is generally carried out for 10 to 45 minutes.

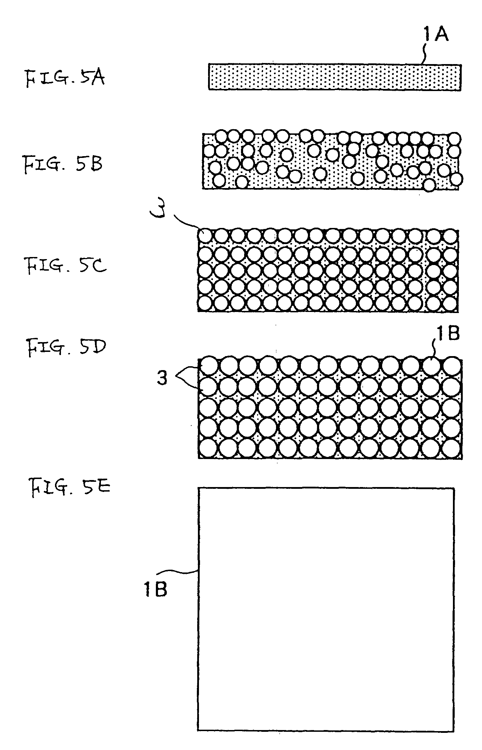

Figs. 5A through 5E schematically illustrate a foaming state at a high humidity. After the foamable slurry is shaped into a predetermined shape, for example the plate as the shaped article 1A (Fig. 5A), the foaming agent in the slurry releases gas to form bubbles 3 in the shaped article 1A in the foaming step (Figs. 5B to 5C). The slurry viscosity is uniform over the entire shaped article 1A at a high humid foaming step, bubbles uniformly grow in the shaped article, and thus the shaped article becomes a cellular article 1B having a uniform cellular structure (Fig. 5D). Further, the high humid foaming step does not cause cracks and other defects on the surface of the cellular article 1B.

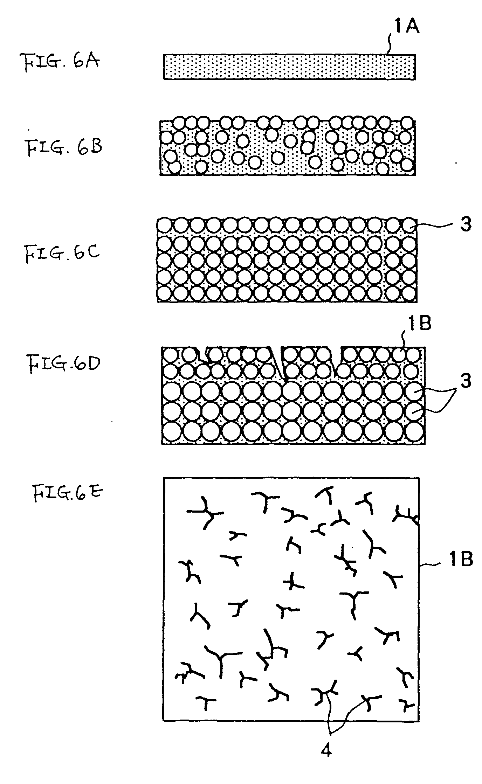

Figs. 6A to 6E schematically illustrate a foaming state when the foamable slurry is dried after shaping or is foamed at a low humidity. In such a low humid foaming, after the foamable slurry is shaped into a predetermined shape as the shaped article 1A (Fig. 6A), the foaming agent in the slurry releases gas to form bubbles 3 in the shaped article 1A in the foaming step (Figs. 6B to 6C), like the high humid foaming step. However, the surface of the shaped article 1A is first dried and the slurry viscosity of the shaped article 1A becomes nonuniform because of the low humid condition. Thus, the bubbles 3 ununiformly grow in the shaped article, resulting in a cellular article 1B having a nonuniform cellular structure (Fig. 6D). Further, cracks and other defects readily form on the surface of the cellular article 1B (Fig. 6E).

Foaming is carried out in the foaming zone having the high temperature humidifier 40 for foaming.

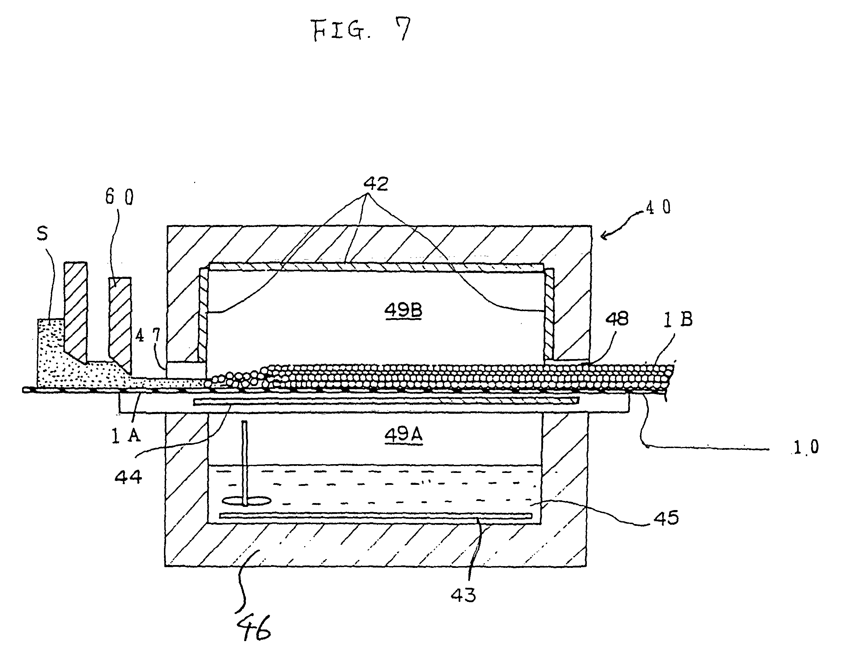

Fig. 7 is a cross-section view of an embodiment of the high temperature humidifier 40 for foaming. Preferably, the high temperature humidifier 40 for foaming comprises an oven 46, which surrounds the carriage path of the carrier sheet as a transfer means and is provided with an inlet 47 and an outlet 48, a water reservoir with a thermostat provided in the oven, a heater 44 for heating the shaped article provided along the carriage path in the oven, and an anti-sweating heater 42 provided on the oven wall. The oven 46 surrounds the carriage path of the carrier sheet 10 and forms spaces 49A and 49B above and below the carrier sheet 10. The inlet 47 for the carrier sheet 10 is provided on the middle of the upstream wall (the first roll side) of the oven 46, and the outlet 48 is provided on the middle of the downstream wall (the second roll side) of the oven 46. The lower space 49A formed below the carrier sheet 10 acts as a water vessel which is filled with a given amount of water 45. A regulating heater 43 is provided at the bottom of the lower space 49A so that the atmosphere in the oven is maintained to a given humid by vaporizing water 45. Preferably, the lower space 49A is provided with a stirrer to uniform the water temperature. A plate heater 42 is provided on the wall in the upper space 49A above the carriage path of the carrier sheet 10 in the oven 46. The plate heater 42 prevents condensation of water on the wall and helps the operation of the regulating heater. A plate heater 44 is provided along the carriage path just below the carrying sheet 10 to promote foaming by heating the shaped slurry article 1A on the carrier sheet 10. Examples of the plate heaters 42 and 44 include carbon plate heaters and examples of the regulating heater include sheathed nichrome wire heaters.

Drying Step

The cellular article 1B is conveyed from the foaming zone to a drying zone 50. Bubbles before dryness are maintained by the existence of water membranes, where the slurry coagulates at the interface between bubbles to form a skeleton structure (cellular structure). When the water membranes break in this state, the slurry forming the skeleton flows to break the skeleton structure. Thus, the cellular structure can be achieved by drying so as not to break the skeleton structure. Rapid drying is one of the methods in which the skeleton structure is not broken. Far infrared drying is suitable for such a purpose.

Preferably, the slurry composition has a characteristic in that the viscosity rapidly increases when water vapors just a little.

Conditions in the drying step include, for example, a temperature of 120 to 180 °C, an atmospheric temperature of 40 to 80 °C, and a drying time of 20 to 120 minutes. After drying, a green sheet 1C is obtained. The thickness of the green sheet 1C is generally three to eight times of the height of G2 shown in Fig. 3. The green sheet is separated from the carrier sheet 10 by carrying while bending downward the carrier sheet.

Examples of the drying method include heat transfer methods such as warm air drying, far infrared heating methods, and microwave heating methods. Among them, the microwave heating methods have a highest drying speed, followed by the far infrared methods. Since the heat transfer methods have a drying speed considerably less than those in other two methods, the cellular article is ununiformly dried between the surface and inside. Thus, either of the far infrared method or the microwave method is effective for rapid water removal. However, because the foamable slurry contains metal powder, the microwave cannot be used due to combustion of the metal powder. Accordingly, the far infrared may be most preferably used. However, the drying machine 50 is not limited to the far infrared drying machine. For example, a warm air drying machine, and a combination of a far infrared heating and a heat transfer such as warm air drying also can be employed in the present invention.

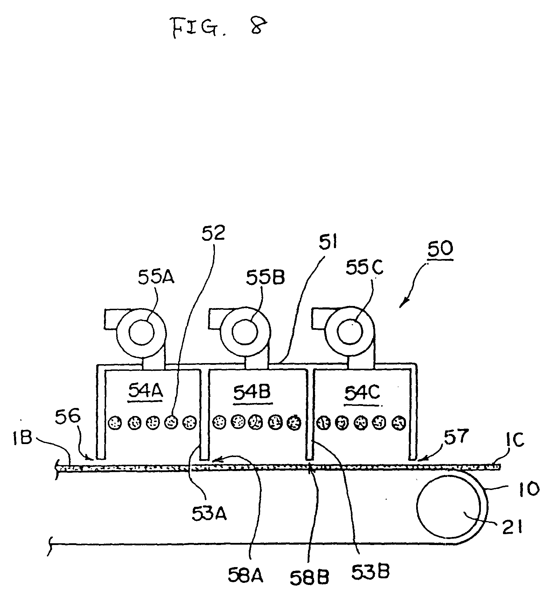

Fig. 8 is a cross-section view illustrating a construction of a far infrared drying machine in accordance with the embodiment of the present invention. The far infrared drying machine 50 surrounds the carriage path of the carrier sheet 10 and has an oven 51 to form a closed space above the carrier sheet 10. The upstream (the first roll side) wall of the oven 51 provides with an inlet 56 for the carrier sheet 10 and the downstream (the second roll side) wall of the oven 51 provides with an outlet 57. The inside of the oven 51 is divided into three compartments 54A, 54B, 54C along the carriage direction with partitions 53A, 53B attached to the upper and side walls inside the oven 51. Suitable gaps 58A, 58B are provided between the partitions 53A, 53B and the carrier sheet 10 so that the cellular article 1B on the carrier sheet 10 can pass through the gaps 58A, 58B toward the next compartment. A plurality of far infrared heaters 52 are provided above the carriage path of the carrier sheet 10 in the compartments 54A, 54B, 54C to dry the cellular article 1B shaped on the carrier sheet 10. Exhausting blowers 55A, 55B, 55C are provided on the upper walls of these compartments 54A, 54B, 54C to evacuate humid gas atmosphere in the compartments. Preferably, the inner walls in the compartments 54A, 54B, 54C have reflecting properties for efficient drying by far infrared rays. The number of the compartments is not limited in the present invention. Alternately, the oven is not necessarily divided into a plurality of compartments, unlike the embodiment set forth above. Further, a plurality of independent far infrared drying machines can be arranged in series.

Preferably, the viscosity of the slurry composition rapidly increases by slight evaporation of water in the slurry in order to obtain a green sheet having a desired cellular structure without breakage of the skeleton structure.

Drying using the far infrared drying machine 50 is carried out at a heater temperature of 120 to 180 °C, at an atmospheric temperature of 40 to 80 °C, and a drying time of 20 to 120 minutes. The dry plate article or green sheet 1C is obtained in such a step. The thickness of the green sheet 1C is generally three to eight times of the height of G2 in Fig. 3.

Cutting Step

The green sheet is cut into a predetermined length with a cutter 70. The cut green sheet is fed to a burning step, for example, according to demand.

In the apparatus for making the sintered porous metal plate in accordance with the embodiment of the present invention shown in Fig. 1, the green sheet 1C is separated by bending while moving the carrier sheet 10. The green sheet 1C is cut into a predetermined length with a cutter 70, and fed to the next step (not shown in the figure).

In the description set forth above, shaping, foaming and drying are carried out in series. Alternately, these treatments can be carried out with their independent apparatuses.

A process for continuously making the unsintered metal foam using the apparatus for making the sintered porous metal plate in accordance with the present invention will now be explained.

1. After shaping a releasing film 2 on the surface of the carrier sheet 10, the slurry reservoir 30 is filled with a foamable slurry S to shape the slurry S into a plate with a doctor blade 60. In detail, the releasing paint u fed into the releasing agent reservoir 80 is extruded from the gap between the doctor blade 90 and the moving carrier sheet 10 to form a coating film 2 having a given thickness. The coating film 2 carried by the carrier sheet 10 is solidified with the releasing agent drying machine 100.

2. On the resulting releasing film 2, a plate article 1A of the foamable slurry S is shaped. The carrier sheet 10 acts as a belt conveyer for the plate article 1A. The foamable slurry S fed into te slurry reservoir 30 is extruded from the gap between the doctor blade 60 and the carrier sheet 10 and is shaped into a plate article 1A having a predetermined thickness. The plate article 1A moves along the carrier sheet 10 toward the high temperature humidifier 40 for foaming.

3. In the high temperature humidifier 40 for foaming, foaming is thoroughly completed in a high humid atmosphere before drying the plate article 1A so as to prevent the dryness of the plate article during foaming.

4. The cellular article 1B in the high temperature humidifier for foaming is moved to the drying zone having the drying machine 50, and the green sheet 1C is obtained after drying.

5. The green sheet 1C is separated by bending downward while moving the carrier sheet 10 and is cut into a predetermined length with the cutter 70. The cut green sheet is fed into the next step, for example a burning step (not shown in the figure).

EXAMPLE 1-1

The present invention will now be illustrated with reference to EXAMPLES.

Foamable slurries were prepared by compounding metal powder, a water-soluble resinous binder, a foaming agent, and a surfactant based on the recipe (by weight percent) shown in Table 1. Each foamable slurry was shaped into a plate article using the apparatus shown in Fig. 3, wherein the gate height of the first blade 60A shown in Fig. 3 was 0.8 mm, the gate height of the second blade 60B was 0.6 mm, and the moving speed of the carrier sheet 10 was 20 cm/min.

The shaped article 1A was foamed in the thermo-hygrostat 40 set at a given temperature and humidity for a given time as shown in Table 2. The shaped article 1B was dried with the far infrared drying machine 50 set to a heater temperature of 160 °C to obtain a green sheet 1C. The green sheet was degreased on a graphite plate in air at 450 °C for 30 minutes. The green sheet was sintered under conditions shown in Table 2 to obtain a sintered porous metal plate. After sintering, the porous metal plate shrunk by 20 percent in length compared with the green sheet.

A part of each sintered porous metal plate was embedded with a resin, and the cross-section was polished. The polished piece was subjected to the measurement of pore size and porosity with an image analyzer and of specific surface area by the BET method. The results are shown in Table 2.

As COMPARATIVE EXAMPLE, a sintered porous metal plate was prepared as follows; after nickel was evaporated to a thickness of 0.5 μm on the inside face of a commercially available polyurethane foam for imparting conductivity, the foam was immersed into a nickel sulfate solution; the foam as the negative electrode was subjected to electroplating at a current density of 1 A/dm$^2$ to form a nickel plating layer having an average thickness of 75 μm on the surface of the open cells of the foam; the plated foam was held in a hydrogen stream at 1,100 °C for 0.5 hours to remove the polyurethane foam. The resulting sintered porous metal plate has a diameter of 50 mm and a length of 100 mm. The pore size, porosity and BET specific surface area of the sintered porous metal plate were determined like EXAMPLE 1-1. Results are shown in Table 2.

Table 1

| | Ingredient | Example 1-1 | Example 1-2 |
|---|---|---|---|
| Metal powder | Pure nickel (average particle size:10 μm) | 60 | - |
| | Stainless steel (average particle size:12 μm) | - | 60 |
| Foaming agent | n-hexane | 1.8 | 1.8 |
| Water-soluble resinous binder | HPMC | 6.5 | 6.5 |
| | MC | 3.5 | 3.5 |
| Surfactant | DBS | 2.0 | 2.0 |
| Plasticizer | glycerin | 2.5 | 2.5 |
| Water | | the balance | the balance |
| HPMC: Hydroxypropylmethyl cellulose MC: Methyl cellulose DBS: Sodiumdodecylbenzenesulfonate | | | |

Table 2

| | | Example 1-1 | Example 1-2 | Comparative Example |
|---|---|---|---|---|
| Foaming conditions | Humidity (%) | 95 | 90 | - |
| | Temperature (°C) | 35 | 30 | - |
| | Holding time (min) | 15 | 30 | - |
| Sintering conditions | Atmosphere | N$_2$-5% H$_2$ | H$_2$ | H$_2$ |
| | Temperature (°C) | 1150 | 1200 | 1100 |
| | Holding time (hrs.) | 3 | 1 | 0.5 |
| Sintered article | Thickness (mm) | 1.8 | 2.0 | - |
| | Average pure size (μm) | 250 | 300 | 290 |
| | Porosity (%) | 95.9 | 96.5 | 95 |
| | Specific surface area (cm$^2$/cm$^3$) | 750 | 810 | 41 |

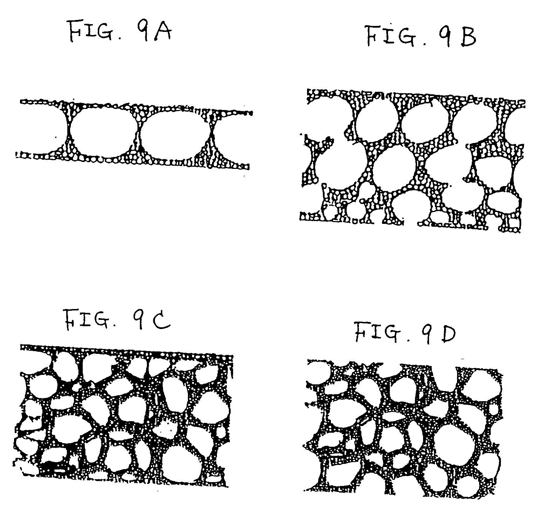

Sintered porous metal plates having a three-dimensional skeleton structure and a large specific surface area can be prepared in such a manner. The resulting sintered porous metal plates have the following various cellular structures as shown in Figs. 9A through 9D, depending on the slurry preparation, foaming conditions, drying conditions, and burning conditions; a single cellular-layer structure as shown in Fig. 9A, a multilayered closed cell structure as shown in Fig. 9B, a closed-surface skeleton structure as shown in Fig. 9C, and an open-surface skeleton structure as shown in Fig. 9D.

The three-dimensional skeleton itself of the sintered porous metal plate in accordance with the present invention is also porous, because the skeleton is made of sintered metal powder. Thus the sintered porous metal plate as a significant specific surface area, for example, 300 to 1,500 $cm^2/cm^3$ as the BET specific surface area. Further, extremely small cells, e.g. of 100 $\mu m$ or less, can be readily formed. The resulting sintered metal powder has an average pore size of 60 to 600 $\mu m$ and the porosity of 90 to 98 volume percent.

The unsintered metal foam obtained by the embodiment in accordance with the present invention can be used as the final sintered porous metal plate for active material carriers of electrodes for alkaline secondary batteries, hydrolysis electrodes, atomizing units for oil heaters, magnetic shield packing, buffers for gas expansion in air cushions using explosives, acoustic insulating materials, hydrolysis filters of water cleaners, electrostatic filters of air cleaners, oil mist filters for exhausted gas, deodorizing catalysts for oil heaters and the like, dust filters for high temperature ducts, substrates of the composite materials of which pores are filled with aluminum at a high pressure, and industrial catalysts and carriers.

Modification of the Embodiment Set Forth above

In the present invention, various modification can be achieved other than the embodiment set forth above.

For example, a resin film which disappears in the burning step of the green sheet 1C and does not affect the properties of the sintered metal foam can be used instead of the releasing film 2 in the embodiment set forth above. Preferably, such a resin film does not shrink in the foaming step and drying step of the foamable slurry, and completely disappear after burning. Further, it is preferable that the resin film readily separates from the carrier sheet 10. Examples of such a resin include urethane resins, epoxy resins, thermosetting polyester resins, heat resistive thermoplastics, acrylic resins, polypropylene resins, and ethylene-vinyl acetate resins. Details will be explained later.

Examples of usable film preparation methods other than the doctor blade 90 include brushing, sponge rolling, and extruding. Further, the resin film can be used without the film preparation step. For example, using a roll winding a resin film, the foamable slurry may be formed on the resin film released from the roll.

The dry green sheet 1C may be burned as a long member without cutting, unlike the embodiment set forth above in which the green sheet 1C is cut with a cutter. In this case, cracks readily form because of a large shrinkage of the dry green sheet 1C. Thus, it is essential that the green sheet can readily move on the carrier in response to the shrinkage of the green sheet, as shown as follows; a lubricant is applied on the surface of the carrier to decrease the contact resistance between the green sheet and the carrier; the carrier is constructed with a plurality of rollers to decrease the contact area between the green sheet and the carrier; or the carrier is tilted by providing the outlet at a position higher than that of the inlet.

As set forth above, an unsintered metal foam having a high degree of freedom of the metal composition and a high specific surface area are readily obtained in accordance with this embodiment.

Second Embodiment

Another preferred embodiment of the foamable slurry will be explained as a second embodiment.

Because an aqueous slurry solution containing a foaming agent is used in the present invention, the foaming agent sometimes foams in the slurry before shaping, and thus the characteristics of the foamed metal are relatively unstable. In the second embodiment, such a problem is improved.

In the preparation of the foamable slurry, components in the slurry are divided into two aqueous solutions, and two solutions are mixed before shaping.

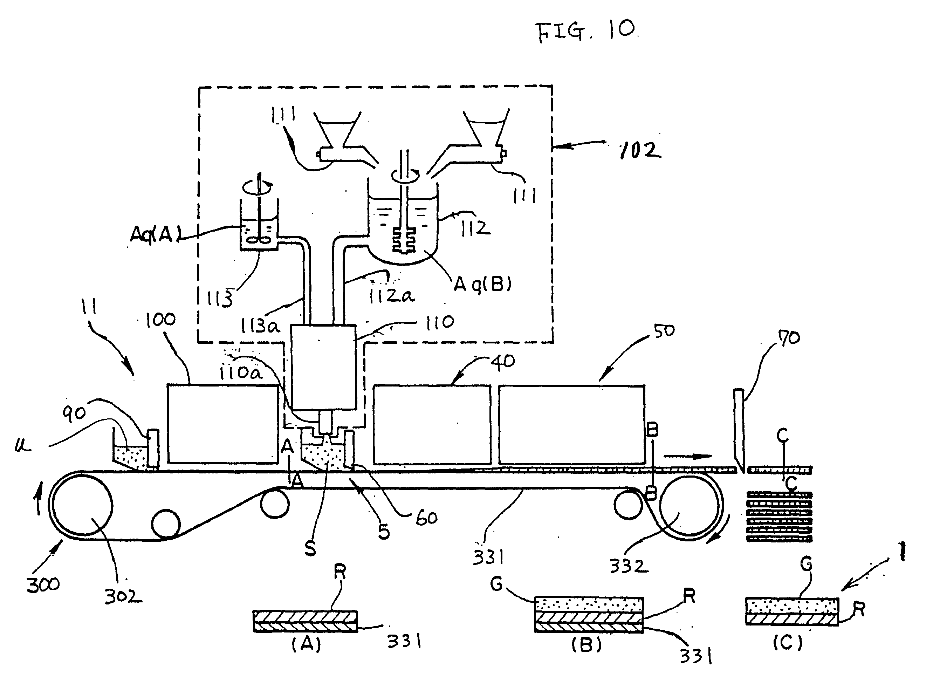

Fig. 10 is a schematic cross-section view of an apparatus for performing continuously the foamable slurry preparation, shaping, foaming and drying, like the apparatus shown in Fig. 10. The apparatus comprises a foamable slurry preparation apparatus 102, carrying apparatus 300, releasing film preparation apparatus 11, shaping apparatus 5, foaming apparatus 40 and drying apparatus 50.

The foamable slurry preparation apparatus 102 comprises a first mixer 113 for mixing aqueous solution (A), a second mixer 112 for mixing aqueous solution (B), and a third mixer 110. The third mixer mixes aqueous solutions (A) and (B) fed from the first and second mixers and feeds the resulting foamable slurry S after mixing to the shaping apparatus 5. The second mixer 112 has two feeders 111 for automatically feeding components for aqueous solution (B).

Constituents for aqueous solution (A) are fed to mix into the first mixer 113 in predetermined amounts, and aqueous solution (A) after mixing (expressed as Aq(A) in Fig. 10) is fed to the third mixer 110 at a given flow rate through a pipe 113a. Similarly, constituents for aqueous solution (B) are fed to mix into the second mixer 112 in predetermined amounts, and aqueous solution (B) after mixing (expressed as Aq(B) in Fig. 10) is fed to the third mixer 110 at a given flow rate through a pipe 112a. Aqueous solutions (A) and (B) are mixed in the third mixer 110 to prepare the foamable slurry S, and the foamable slurry S is fed to the foaming machine 5 through a pipe 110a.

The foamable slurry S contains metal powder, a water soluble resinous binder, a foaming agent, a surfactant, and water, like the first embodiment. Metal powder comes together toward thin liquid walls surrounding fine bubbles in the foamable slurry, and the metal powder, as well as the water-soluble resinous binder, is solidified so as to maintain the shape of bubbles. The binder is removed by burning, and the metal powder is sintered to form a sintered porous metal plate having a three-dimensional network structure.

Examples of metals for the metal powder include all metals which can be powdered and sintered. Thus, the composition of the metal has a high degree of freedom, e.g. many kinds of metal and many combinations of different kinds of metal are available. Further, the skeleton itself has a porous structure because of sintered metal. Therefore, the sintered porous metal has an extremely high specific surface area.

In this example, the constituents of the foamable slurry are divided into two solutions, and the volatilization of the foaming agent is reduced by mixing these two solutions just before feeding to the shaping machine.

Examples of constituents in solution (A) include a foaming agent, a surfactant, and a water-soluble resinous binder. Examples of constituents in solution (B) include metal powder and a water-soluble resinous binder.

The same foaming agents as in the first embodiment also can be used in the second embodiment. The foaming agent is added into aqueous solution (A) so that the content of the foaming agent in the slurry is 0.05 to 10 weight percent and preferably 0.5 to 5 weight percent. Bubbles may insufficiently form or the porosity may decrease at a content of less than 0.05 weight percent. On the other hand, larger micelles form at a content over 10 weight percent. As a result, the strengths of the resulting green sheet and sintered article may decrease due to formation of larger bubbles.

The same surfactants as in the first embodiment also can be used in the second embodiment for stabilizing the foaming state and promoting the micelle formation. The surfactant is added into aqueous solution (A) so that the content of the surfactant in the slurry is 0.05 to 5 weight percent and preferably 0.5 to 3 weight percent. The micelle formation is unstable and fine bubbles are not maintained in the slurry at a content of less than 0.05 weight percent. On the other hand, at a content over 5 weight percent, effects are no longer improved. The surfactant can be added to both of aqueous solutions (A) and (B).

The water-soluble resinous binder is added to maintain the shape of the cellular article during drying the slurry and to adjust the viscosity of the slurry. The same water-soluble resinous binder as in the first embodiment can be used in the second embodiment. Preferably, the amount of the water-soluble resinous binder in aqueous solution (A) is adjusted so that the concentration in the foamable slurry is 0.5 to 20 weight percent and more preferably 2 to 10 weight percent after mixing with solution (B). The amount of less than 0.5 weight percent causes too low strength for satisfactory handling. On the other hand, the amount over 20 weight percent causes poor shaping characteristics because of the excessive viscosity increase.

The content of each component in solution (A) is as follows:

| | |
|---|---|
| Foaming agent: | 0.05 to 10 weight percent, in particular 0.5 to 5 weight percent |
| Surfactant: | 0.05 to 5 weight percent, in particular 0.5 to 3 weight percent |
| Water-soluble resinous binder: | 0.5 to 20 weight percent, in particular 2 to 10 weight percent |

The viscosity of aqueous solution (A) is preferably 5,000 to 80,000 cps and more preferably 10,000 to 40,000 cps at room temperature.

Aqueous solution (A) is prepared by mixing the above-mentioned components with the first mixer 113. Mixers, such as blade mixers and static mixers, can be used as the first mixer 113.

Another aqueous solution (B) comprises metal powder, water-soluble resinous binder and the like, as set forth above. The usable metal is not limited to and may include all sintering metals and alloys of nickel, copper, iron, stainless steels, chromium, cobalt, gold, silver and the like. The average particle size of the metal powder is 500 μm or less, and more preferably 0.5 to 100 μm. When the average particle size is less than 0.5 μm, the expected porosity may not be achieved. On the other hand, the strength of the sintered porous metal plate is too low at an average particle size exceeding 500 μm. The metal powder is added to solution (B) so that the content in the foamable slurry is 5 to 80 weight percent and more preferably 30 to 80 weight percent after mixing with solution (A).

Any water-soluble resinous binders set forth above can be used. The water-soluble resinous binder is added so that the viscosity of aqueous solution (B) at room temperature is 20,000 to 200,000 cps and preferably 25,000 to 50,000 cps. The content of each component in aqueous solution (B) is as follows:

| | |
|---|---|
| Metal powder: | 5 to 80 weight percent, in particular 50 to 70 weight percent |
| Water-soluble resinous binder: | 0.5 to 20 weight percent, in particular 2 to 10 weight percent |

General blade mixers and kneaders can be used as the second mixer 112 due to the high viscosity of aqueous solution (B).

The foamable slurry in the second embodiment may include a plasticizer, a combustible material for promoting the pore formation, other than the essential components set forth above. Although, these additive can be added to either of aqueous solution (A) or (B), these are preferably added to aqueous solution (B).

The plasticizer endows the shaped article with plasticity, and the same plasticizer as in the first embodiment can be used in the second embodiment. The plasticizer is added to aqueous solution (A) or (B) so that the concentration in the foamable slurry is 0.1 to 15 weight percent and more preferably 2 to 10 weight percent. The plasticity is insufficient at a content of less than 0.1 weight percent in the foamable slurry. On the other hand, the strength of the shaped article is insufficient at a content over 15 weight percent.

A combustible material for promoting the pore formation promotes the pore formation by disappearing in the burning step of the dry shaped article. Any materials having a shape, such as powder and fiber, and disappearing in the burning step can be used. Examples of such materials include powder of 0.1 to 200 $\mu$m, and fiber having a length of 200 $\mu$m or less, and preferably 30 to 120 $\mu$m.

The foamable slurry in the second embodiment can be prepared by mixing aqueous solutions (A) and (B). The weight ratio (A)/(B) of aqueous solution (A) to aqueous solution (B) ranges from 0.5/9.5 to 3/7, and preferably from 0.9/8 to 1.8/7.5.

Examples of the third mixer 110 include mixers for rotating screws or Z-shaped blades, and internal mixers. The viscosity of the resulting foamable slurry ranges from 20,000 to 70,000 cps and preferably 30,000 to 55,000 cps at 20 °C. The cellular structure may be broken in the drying step at a viscosity of less than 20,000 cps. On the other hand, the slurry may be barely shaped at a viscosity exceeding 70,000 cps.

In the apparatus set forth in the second embodiment, the foamable slurry prepared by mixing in the third mixer is fed to the foaming machine 5. Thus, the time, from that the foaming agent is mixed in the foamable slurry to that the slurry is fed to the foaming step, can be considerably shortened.

Third Embodiment

The dry shaped plate article of the foamable slurry is subjected to the sintering step to form a sintered porous metal plate. The dry plate article as an intermediate is fragile and thus it is hard to transport or reserve it.

In the third embodiment, it is an object to provide a composite material as an intermediate enabling the dry plate article to readily handle, a method of making the composite material, and a method for making a sintered porous metal plate using the composite material.

Fig. 10 is also an apparatus for making a composite material in accordance with the third embodiment. Parts and their operations other than parts for preparing the foamable slurry will be explained with reference to Fig. 10. The process other than the production of the composite material is the same as the first embodiment.

In the third embodiment, a composite material composed of a green sheet and a resin film is continuously produced by moving the composite material like a belt conveyer.

The carrying apparatus 300 moves the carrier sheet 331 as a belt conveyer in the arrow direction with driving rollers 332, 333, which are driven by driving powers (not shown in the figure.
From the beginning end to the final end of the carrier sheet 331, the material is subjected to a releasing film preparation step, a shaping step, a foaming step, a drying step, and a cutting step, like the first embodiment.

The foamable slurry S is extruded from the gap between the blade 60 and the resin film R to shape into a plate having a predetermined thickness.

In the releasing film preparation step as shown in a cross-section view (A) along line A-A in Fig. 10, a resin film R is formed on the carrier sheet 331. The foamable slurry is shaped on the resin film R. The doctor blade 90 is used as a releasing film preparation machine 11. An uncured polyurethane solution is applied on the carrier sheet in a thickness of 0.05 to 0.2 mm, for example, with the doctor blade 90, and cured in the drying machine 100 to form the releasing film R on the carrier sheet 331. Instead of the releasing film preparation step, the foamable slurry may be shaped on a roll which is made of a releasing resin film.

In the shaping step, the foamable slurry S is shaped into a thin plate having a thickness of 0.1 to 15 mm and preferably 0.2 to 2 mm, on the resin film R with the doctor blade 60 having two blades.

The foamable slurry on the carrier sheet 331 enters into the foaming machine 40 to completely foam the foamable slurry. Although the foaming machine 40 may be a humidifier-with-heater-type shown in Fig. 7, a high-humid, high-temperature condition also can be achieved without the humidifier-with-heater type machine. 'The foamable slurry is foamed for 10 to 45 minutes in the foaming machine 40.

The foamed slurry is dried in the drying machine 50, as shown in Fig. 8, to obtain a composite material composed of the dry plate article or green sheet G and the resin film R. A suitable drying machine is a far infrared drying machine, and the drying conditions are the same as the first or second embodiment, i.e., a heater temperature of 120 to 180 °C, an atmospheric temperature of 40 to 80 °C, and a drying time of 20 to 120 minutes. In such a manner, a dry, plate green sheet G laminated on the resin film R is prepared as set forth in Fig. 10 (B). The thickness of the green sheet G is generally three times to eight times of the thickness immediately after shaping. A composite material 1 comprising the dry green sheet G and the resin film R is formed on the carrier sheet as set forth in a cross-section view (B) along the B-B line in Fig. 10.

Next, the composite material 1 is separated from the carrier sheet 331. Finally, the composite material 1 is cut into a given length with the cutter 70.

The handling of the fragile green sheet G is improved by the composite 1 with the resin film R. A usable resin film R is what disappears in the sintering step of the dry cellular article G and does not affect the characteristics of the sintered porous metal plate. Preferably, the resin does not shrink in the foaming and drying steps of the foamable slurry and completely disappears in the sintering step. Additionally, it is preferable that the resin readily separates from the carrier sheet 331. An preferred example of the resin is a urethane resin. Examples of other usable resins include epoxy resins, thermosetting polyesters, heat resistive thermoplastic resins, such as polyvinyl resins, butyral resins and acrylic resins.

In the apparatus shown in Fig. 10, the resin film R is separated from the carrier sheet 331 by winding while moving downward the carrier sheet 331 to the roller 332. The composite material 1 comprising the dry green sheet G and the resin film R is cut into a predetermined length with the cutter 70 and stacked up as shown in the figure. The foamable slurry can be shaped directly on the carrier sheet 331, instead of the use of the resin film.

The composite material 1 is converted to a sintered porous metal plate through the sintering step as set forth in the second embodiment.

The resin film disappears in the degreasing step. Since the volume decreases by approximately 20 percent during degreasing and sintering, degreasing and sintering are preferably carried out on a slidable plate such as a graphite plate. The thickness can be controlled by skin path rolling and the like after the sintering step.

As described above, the composite material in the third embodiment is prepared by shaping and drying the foamable slurry containing metal powder on the resin film. The composite material enables the fragile green sheet to readily handle, transport and store. After sintering, a sintered porous metal plate can be prepared by burning out the resin film. A resin film previously prepared can be used. Alternately, a foamable slurry may be shaped on a resin film which is formed at a film preparation step just before the shaping step of the foamable slurry. A preferably material for the resin film is a polyurethane resin which less shrinks in the drying step of the foamable slurry, has an excellent shape retaining property and disappears in the sintering step.

According to the third embodiment, the composite material of the green sheet which is readily handled can be produced, as set forth above. Thus, the sintered porous metal plate can be finally obtained in a high yield.

EXAMPLE 1-2

A composite material comprising a dry green sheet G and a resin film R was prepared, in a manner similar to EXAMPLE 1-1, but a resin film preparation step is added.

In the resin film preparation step, a resin film R is formed on the carrier sheet 331 as shown in cross-section view (A) along the A-A line in Fig. 10. An uncured polyurethane solution u, for example, was applied on the carrier sheet 331 with the doctor blade 90 as the releasing film preparation machine 11 in a thickness of 0.05 to 0.3 mm, for example and cured in the drying machine 100 to form the releasing film R on the carrier sheet 331.

The following shaping, foaming, drying, and cutting steps were the same as EXAMPLE 1-1.

Fourth Embodiment

When the foamable slurry is foamed and dried at the same time, the surface of the green sheet is first dried and thus nonuniform foaming may occur or some cracks may form on the surface of the green sheet.

In the forth embodiment, it is an object to provide a method and apparatus for uniformly foaming inside the foamable slurry.

A liquid medium is sprayed on the surface of the foamable slurry in an open chamber as a slurry reservoir based on the following ground. Although the open chamber is effective for releasing bubbles caught in the foamable slurry into atmosphere, the surface of the foamable slurry is dried at the same time in the open chamber. Thus, when a foamable slurry is supplied into the open chamber, the air bubbles are caught in the inside of the foamable slurry along the interface Ssu of the original slurry. If the shaped plate article of the foamable slurry includes such air bubbles, unexpected pores based on the air bubbles will be formed in the porous metal plate. Since the pores from the air bubbles have a different pore size from pores formed by the foaming agent, the porous metal plate has a nonuniform cellular structure. When the liquid medium is sprayed onto the surface of the slurry, the surface in the reservoir is not dried, and thus the nonuniform cellular structure in the porous metal plate can be prevented.

The fourth embodiment is characterized by spraying a liquid medium on the surface of the foamable slurry.

Modification in the Fourth Embodiment

The slurry reservoir or open chamber 30 in accordance with the fourth embodiment is provided with a humidifier 69 for spraying a liquid medium M onto the surface Ssu of the slurry S. The dryness of the surface Ssu of the slurry S in the slurry reservoir 30 can be prevented by spraying the liquid medium from the humidifier on the slurry. Further, air bubbles are not caught in the inside of the slurry The spraying operation can be continuously or interrupted.

Two blades 60A, 60B shown in Figs. 3 and 4 are used as the doctor blade 60 in this embodiment.

EXAMPLE 2

A fluorocarbon resin dispersion as a releasing agent (R) was applied on the steel belt in the apparatus shown in Figs. 1 and 10.

A foamable slurry (S) was prepared by mixing aqueous solution (A) and aqueous solution (B) in the mixer 110 of the slurry mixing machine 102, wherein aqueous solution (A) contains 1.5 weight percent of hydroxypropylmethyl cellulose, 30.8 weight percent of glycerin, 30.8 weight percent of hexane, 4 weight percent of sodium dodecylbenzene sulfonate and the balance water, and aqueous solution (B) contains 62.0 weight percent of pure nickel powder having an average particle size of 10 μm, 2.4 weight percent of hydroxypropylmethyl cellulose and the balance water. Each of cellular articles 1 to 9 was prepared by the following procedure; the foamable slurry (S) was applied on the steel belt 1 with a height of the doctor blade 60 shown in Table 3; the foamable slurry (S) was foamed under conditions shown in Table 3 by adjusting the temperatures of heaters 42, 43, 44 in the humidifier 40 with heater; and then the foamed slurry was dried in the far infrared drying machine 50 under conditions shown in Table 3.

The holding time of the slurry in the humidifier 40 was adjusted by changing the moving speed of the steel belt. The resulting cellular article was degreased and preliminarily sintered in a 5%-nitrogen-containing hydrogen atmosphere at 850 °C for 30 minutes and was sintered at 1,250 °C for 15 minutes to obtain metal foams No. 1 to 9. The porosity of each resulting metal foam was calculated from its weight and size. The pore size was determined by the image analysis of optical microscope photographs which are taken at ten points at ten magnification. The results are summarized in Table 4.

For comparison, metal foams No. 11 to 14 shown in Table 4 were prepared by the same shaping and sintering conditions, except that foaming was carried out at a room temperature of 20 °C and a humidity of 55% without operating the high temperature humidifier The porosity and pore size were determined in the same methods.

Tables 3 and 4 evidently demonstrate foam metals having a high porosity of 97% or more can be readily produced for a short time by shaping under predetermined conditions, i.e., a temperature of 35 to 65 °C and a humidity of 70% or more in this embodiment, using the high temperature humidifier.

The inside of the dry green sheet has a uniform cellular structure according to this embodiment. Thus, the sintered porous metal plate having a high degree of freedom on the metal composition and a high specific surface area can be readily and surely produced.

Table 3

| Sample | | Foaming conditions | | | | | | |
|---|---|---|---|---|---|---|---|---|
| | | Height of blade mm | High temp. humidifier (foaming conditions) | | | Far infrared drying machine | | |
| | | | Temp. °C | Humidity % | Holding time min. | Heater temp. °C | Atmospheric temp. °C | |
| High temp. humidifier of this invention is used | 1 | 0.10 | 35 | 95 | 15 | 140 | 40 | |
| | 2 | 0.10 | 50 | 75 | 15 | 140 | 40 | |
| | 3 | 0.30 | 65 | 80 | 5 | 160 | 45 | |
| | 4 | 0.30 | 40 | 95 | 20 | 140 | 40 | |
| | 5 | 0.50 | 35 | 90 | 30 | 140 | 40 | |
| | 6 | 0.50 | 50 | 70 | 15 | 160 | 45 | |
| | 7 | 0.10 | 25 | 65 | 10 | 140 | 40 | |
| | 8 | 0.30 | 30 | 60 | 20 | 140 | 40 | |
| | 9 | 0.50 | 30 | 65 | 15 | 160 | 45 | |

Table 3   (continued)

| Sample | | Foaming conditions | | | | | |
|---|---|---|---|---|---|---|---|
| | | Height of blade mm | High temp. humidifier (foaming conditions) | | | Far infrared drying machine | | |
| | | | Temp. °C | Humidity % | Holding time min. | Heater temp. °C | Atmospheric temp. °C | |
| Not used | 1 1 | 0.10 | 20 | 55 | 5 | 140 | 40 | |
| | 1 2 | 0.30 | 20 | 55 | 15 | 140 | 40 | |
| | 1 3 | 0.30 | 20 | 55 | 30 | 160 | 45 | |
| | 1 4 | 0.50 | 20 | 55 | 60 | 160 | 45 | |

Table 4

| Sample | | Characteristics of metal foam | | |
|---|---|---|---|---|
| | | Porosity % | Pore size μm | |
| High temp. humidifier of this invention is used | 1 | 97.5 | 206 | |
| | 2 | 97.7 | 210 | |
| | 3 | 97.1 | 180 | |
| | 4 | 98.4 | 225 | |
| | 5 | 98.7 | 262 | |
| | 6 | 97.4 | 214 | |
| | 7 | 95.5 | 255 | |
| | 8 | 96.3 | 218 | |
| | 9 | 96.1 | 216 | |
| Not used | 11 | 92.5 | 265 | |
| | 12 | 94.6 | 286 | |
| | 13 | 95.5 | 314 | |
| | 14 | 96.0 | 328 | |

Fifth Embodiment

The fifth embodiment includes a method and apparatus for produce a sintered porous metal plate by degreasing and sintering the unsintered metal foam shaped in the first embodiment, and the resulting sintered porous metal plate

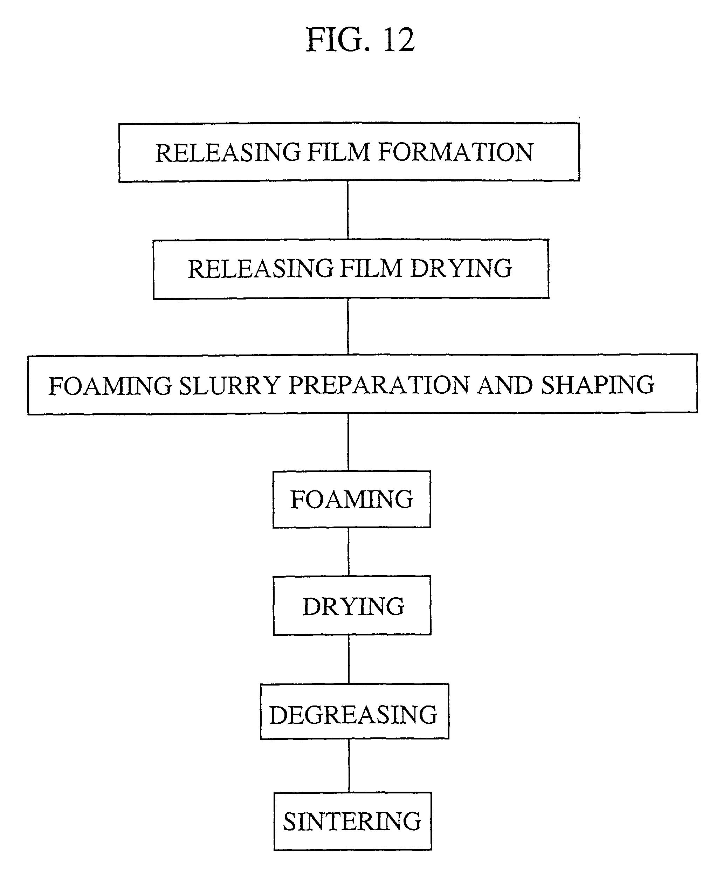

Fig. 12 is a flow chart illustrating a method for producing the sintered porous metal plate in accordance with the fifth embodiment of the present invention

The sintered porous metal plate was produced through degreasing and sintering steps as shown in Fig. 12 from the unsintered metal foam which was produced through the releasing film preparation, releasing film drying, shaping, foaming, and drying steps shown in Fig. 2.

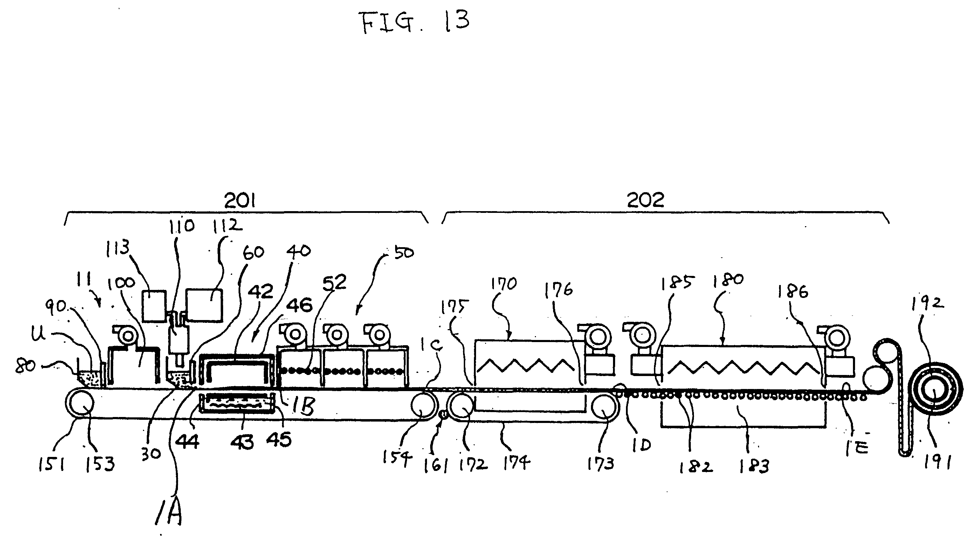

Fig. 13 is a cross-section view of an apparatus for producing the sintered porous metal plate for performing the process shown in Fig. 12. The apparatus in Fig. 13 is the same as that shown in Fig. 1 but further including machines for the degreasing and sintering step. The method, apparatus and operation for producing the unsintered metal foam are basically the same as the first embodiment.

The degreasing step is referred to as a preliminary sintering step because it is a kind of baking step, and thus the proper sintering step is referred to as a final sintering step.

Degreasing Step

In the degreasing step, the unsintered cellular article is baked to volatile organic materials, such as binder, at a temperature of 300 to 700 °C for 10 to 60 minutes in air or a reducing gas atmosphere such as hydrogen.

Proper sintering Step

In the proper sintering step, the degreased cellular article is baked to sinter the metal powder at a temperature of 800 to 1,400 °C for 20 to 120 minutes in an ammonia decomposed gas atmosphere, in a reductive gas atmosphere such as hydrogen, in vacuo, or in air according to the nature of the used metal. Since the volume decreases by approximately 20% by shrinkage during degreasing and sintering, these steps are preferably performed on the slidable plate. The thickness of the sintered article may be controlled by skin path rolling and the like. The degreasing and sintering steps can be carried out in series.

Apparatus in the Fifth Embodiment

An apparatus shown in Fig. 13 in accordance with the fifth embodiment comprises a shaping machine section 201, shown as the apparatus in accordance with the first embodiment in Fig. 1, and a burning section 202 which is added in the fifth embodiment. The figure in Fig. 13 also includes a carrying system.

The shaping machine section 201 is the same as that in Fig. 1 for producing the unsintered metal foam. The shaping machine comprises, from the first roll 153 side to the second roll 154 side, a releasing film coating machine 11, a warm air drying machine 100, a slurry reservoir 30, a doctor blade 60 for shaping the slurry, a high temperature humidifier 40 for foaming, and a drying machine 50 for obtaining the unsintered metal foam.

The shaping machine section 201 has a first roll 153 (corresponding to the roll 20 in Fig. 1) and the second roll 154 (corresponding to the roll 21 in Fig. 1) to carry a steel carrier sheet 151. The carrier sheet 151 carrying between the first and second rolls 153, 154 acts as a belt conveyer (transfer means).

The releasing agent coating machine 11 has the releasing agent reservoir 80 and a doctor blade 90 for applying the releasing agent, like the first embodiment. The releasing agent reservoir 80 is a rectangular parallelepiped and provided on the carrier sheet 151 near the first roll 153, and the doctor blade 90 is provided on the downstream wall of the releasing agent reservoir 80 so as to maintain a predetermined gap with the carrier sheet 151. The film thickness of the releasing agent u is adjusted by the gap between the doctor blade 90 and the carrier sheet 151. When a releasing agent u such as a fluorohydrocarbon dispersion is fed into the releasing agent reservoir 151 while carrying the carrier sheet 151, the releasing agent u is extruded from the gap between the doctor blade 90 and the carrier sheet 151 to form a film having a predetermined thickness. The coated film moves along with the carrier sheet 151 to the next releasing agent drying machine 100.

Drying machines such as warm air drying machines and far infrared drying machines can be used as the releasing agent drying machine 100, like the first embodiment, to solidify the coated film of the releasing agent. The resulting releasing agent film is used as a carrier tape of the sintered porous metal plate and is removed by burning out in the sintering step. The formation of the releasing agent film is carried out for ready handling of the fragile dry green sheet as set forth below.

The slurry reservoir (chamber) 30 is a rectangular parallelepiped placed on the carrier sheet 151 downstream of the releasing agent drying machine 100, like the first embodiment. The upstream wall of the slurry reservoir 30 is provided with the doctor blade 60 having a predetermined gap with the carrier sheet 151. The thickness of the shaped article 1A is adjusted by the gap between the doctor blade 60 and the carrier sheet 151. When a foamable slurry is fed into the slurry reservoir 30 while moving the carrier sheet 151, the foamable slurry is extruded from the gap between the doctor blade 60 and the carrier sheet 151 to shape into a plate article 1A having a predetermined thickness. Above the slurry reservoir 30, the foamable slurry mixer is provided for preparing the foamable slurry fed into the slurry reservoir 30. The foamable slurry mixer is provided with a foaming-agent-containing solution reservoir 113, a metal-powder-containing solution reservoir 112, and a kneader 110 for preparing the foamable slurry S by mixing materials fed from these two reservoirs. The volatilization of the foaming agent can be effectively prevented by dividing the constituents of the foamable slurry into the two solutions and mixing them just before feeding the slurry to the doctor blade.

The foamable slurry can be prepared in the same manner as the first or second embodiment.

The high temperature humidifier 40 is the same as that described in Fig. 7 in accordance with the first embodiment. The high temperature humidifier 40 in Fig. 13 has a rectangular parallelepiped oven 46 which surrounds the carriage path of the carrying sheet 151 and forms closed spaces above and below the carrier sheet 151. At the upstream (the first roll 153 side) wall of the oven 46, an inlet for carrier sheet 151 is provided. On the other hand, at the downstream (the second roll 154 side) wall of the oven 46, an outlet for carrier sheet 151 is provided. The lower space below the carrier sheet 151 acts as a water reservoir, which contains a given amount of water 45 as a humid source. Other construction and operation are the same as the illustration in Fig. 7.

The foamed article 1B from the high temperature humidifier 40 for foaming is carried to the drying zone including the drying machine 50.

The drying machine 50 is the same as that in Fig. 8. The conditions for drying are the same as those in the first embodiment. In the embodiment in Fig. 13, the green sheet or dry plate article is separated from the carrier sheet 151 bending downward while carrying at the second roll 154.

The dry green sheet 1C is fed into the burning section 202. Preferably, the sintering of the metal foam which is carried out in the burning section 202 includes two steps, i.e., the first or degreasing step for removing organic components such as binder, and the second or proper sintering step for sintering the metal powder. By performing these steps in the same plane in series, the time, at which the plate article is a significantly fragile state, is shortened. Thus, the quality of the resulting sintered article is stable.

The degreasing and preliminary sintering step can be carried out in air, in a nitrogen atmosphere, or in a reductive gas atmosphere such as gaseous hydrogen (containing nitrogen, if necessary), at a temperature of 300 to 900 °C, or of 700 to 900 °C for preparing a porous metal plate, for 10 to 60 minutes. The proper sintering step is preferably carried out in a reductive atmosphere, such as a decomposed ammonia gas or gaseous hydrogen, in vacuo, in air, or in a gaseous nitrogen, at a temperature of 800 to 1,400 °C or of 1,000 to 1,300 °C for preparing a porous metal plate for 20 to 120 minutes, depending on the used metal.

In Fig. 13, the burning section has a degreasing/preliminary sintering oven 170 and a proper sintering oven 180 along the carriage direction. The degreasing/preliminary sintering oven 170 has a carrier sheet 174 of a steel belt, which is driven by a first roll 172 and a second roll 173 with a driving unit and acts as a belt conveyer (transfer means). The degreasing/preliminary sintering oven 170 is a rectangular tunnel oven which forms a close space above the carrier sheet 174. An inlet 175 for the carrier sheet 174 is provided on the upstream side wall of the first roll 172 in the oven, and an outlet 176 is provided on the downstream side wall of the second roll 173 in the oven.

The degreasing/preliminary sintering oven 170 may be heated with a nichrome wire heater, a Mo heater, a SiC heater or a W heater, depending on the sintered metal.

A lubricating agent coating machine 161 is provided below the first roll 172 in contact with the carrier sheet 174, so that a lubricating agent is applied to the surface of the carrier sheet 174 prior to carrying the dry green sheet 1C.

The degreasing/preliminary sintering step intends the volatilization of the organic components such as binder in the green sheet 1C. Since a slight shrinkage of the green sheet occurs in this step, the lubricating agent applied on the surface of the carrier sheet 174 causes effective sliding between the carrier sheet 174 and the dry green sheet 1C and thus absorbs the distortion of the green sheet due to the shrinkage. Examples of usable lubricating agents include liquids and solids of graphite, pitch, silicon, boron nitride, and silicon carbide.

Although a steel belt is used as the carrier sheet in this embodiment, more heat resistive metals, such as stainless steel, nickel based heat resistive alloys and molybdenum alloys, also can be used.

The dry green sheet 1C is degreased and preliminarily sintered to form a degreased sheet 1D in the degreasing/preliminary sintering oven 170. The degreased sheet 1D is separated from the moving carrier sheet 174 at the second roll 173 and is fed into the proper sintering oven 180.

Proper Sintering

The proper sintering oven 180 is a rectangular tunnel oven forming a closed space, like the degreasing/preliminary sintering oven 170. An inlet 185 for the degreased sheet 1D is provided at the upstream side wall of the proper oven 180 and an outlet 186 is provided at the down stream side wall of the proper oven 180. A plurality of carriage rollers 182 are provided from the inlet 185 to the outlet 186 in series in the proper oven 180 to form a roller hearth 183 as a continuous sintering oven bed. Each carriage rollers 182 rotates in the carriage direction by driving means (not shown in the figure) independently, or partly or entirely cooperatively. The roller hearth 183 is extended to the neighborhood of the second roll 173 of the degreasing/preliminary sintering oven 170 and to the outside of the outlet 186. The degreased sheet 1D moves on a plurality of carriage rollers 182 rotating in the carriage direction while coming in contact with carriage rollers.

The interval between carriage rollers 182 of the roller hearth 183 is decided based on the thickness and porosity of the degreased sheet 1D, the sintering state and the like. Since a large interval causes insufficient support of the degreased sheet, a suitable distance must be determined. For example, the interval ranges from approximately 25 to 70 mm. At the inlet 185 and its neighborhood, carriage rollers are desirably provided at a shorter interval.

Instead of carriage rollers, a plurality of spherical or elliptic spherical members also may be used as a transfer means which supports the degreased sheet 1D in a point contact. Such a line or point contact means may be employed only at the section causing a large shrinkage of the degreased sheet 1D, and any conventional transfer means such as belt conveyer can be employed in other sections. The line or point contact means can be employed for the transfer means in the degreasing/preliminary sintering oven 170.

The metal plate shrinks at most approximately 20% by sintering when a nickel foam is burned at 1,200 °C. When a conventional belt furnace is used, a sintered porous metal plate having a length of at most a few dozen centimeters is obtained. In contrast, in this embodiment, a long sintered porous metal plate 1E can be obtained by the above-mentioned transfer means. In detail, the contact resistance between the cellular article and the transfer means is significantly small, because the cellular article moves on a plurality of rolling articles in a line or point contact, the cellular article readily slips on the rolling articles, and thus the shrinkage of the cellular article can be readily achieved. Since the distortion due to the shrinkage is absorbed, cracks due to the shrinkage can be prevented.

Preferably, the rotation rate of the each rotation member 182 is adjusted in response to the amount of the shrinkage. For example, the shrinkage without distortion can be readily carried out by setting such that the rotation rate at the outlet is smaller than that at the inlet.

The proper sintering oven 180 may be divided into a plurality of booths, and in particular at least three booths, in which the temperatures of these booths are raised in the carriage direction in order to gradually sinter the cellular article. In such a proper sintering oven 180, cracks caused by rapid heating can be prevented and thus sintering can be stably carried out.

The heating rate in the carriage direction in the proper sintering oven 180 ranges preferably from 2 to 50 °C/min. and more preferably from 3 to 30 °C/min.

The heater provided in the proper sintering oven 180 is not limited, like that in the degreasing/preliminary sintering oven 170, and is appropriately selected from nichrome heaters, Mo heaters, SiC heaters, and W heaters, for example.

The resulting sintered metal plate 1E is fed out from the proper sintering oven 180, and is wound on a winding machine 191 as a continuous roll strip 192.

The thickness of the sintered metal plate 1E can be controlled by skin path rolling or the like, if necessary. The rolling rate $V_2$ of the roller is expressed by the following equation:

$$V_2 = V_1 \times (100 - S)/100$$

wherein S represents a final shrinkage rate of the sintered metal and $V_1$ represents a moving speed of the carrier sheet in the burning machine.

Sintered porous metal plates having a three-dimensional skeleton structure and a large specific surface area can be prepared in such a manner. The resulting sintered porous metal plates have the following various cellular structures as shown in Figs. 9A through 9D, depending on the slurry preparation, foaming conditions, drying conditions, and burning conditions; a single cellular-layer structure as shown in Fig. 9A, a multilayered closed cell structure as shown in Fig. 9B, a closed-surface skeleton structure as shown in Fig. 9C, and an open-surface skeleton structure as shown in Fig. 9D.

The three-dimensional skeleton itself of the sintered porous metal plate in accordance with the present invention is also porous, because the skeleton is made of sintered metal powder. Thus the sintered porous metal plate as a significant specific surface area, for example, 300 to 1,500 $cm^2/cm^3$ as the BET specific surface area. Further, extremely small cells, e.g. of 100 $\mu m$ or less, can be readily formed. The resulting sintered metal powder has an average pore size of 60 to 600 $\mu m$ and the porosity of 90 to 98 volume percent.

As COMPARATIVE EXAMPLE, a sintered porous metal plate was prepared as follows; after nickel was evaporated to a thickness of 0.5 $\mu m$ on the inside face of a commercially available polyurethane foam for imparting conductivity, the foam was immersed into a nickel sulfate solution; the foam as the negative electrode was subjected to electroplating at a current density of 1 $A/dm^2$ to form a nickel plating layer having an average thickness of 75 $\mu m$ on the surface of the open cells of the foam; the plated foam was held in a hydrogen stream at 1,100 °C for 0.5 hours to remove the polyurethane foam. The resulting sintered porous metal plate has a diameter of 50 mm and a length of 100 mm. The pore size, porosity and BET specific surface area of the sintered porous metal plate were determined like EXAMPLE 1-1. Results are shown in Table 2.

The sintered porous metal plate obtained by the embodiment in accordance with the present invention can be used for active material carriers of electrodes for alkaline secondary batteries, hydrolysis electrodes, atomizing units for oil heaters, magnetic shield packing, buffers for gas expansion in air cushions using explosives, acoustic insulating materials, hydrolysis filters of water cleaners, electrostatic filters of air cleaners, oil mist filters for exhausted gas, deodorizing catalysts for oil heaters and the like, dust filters for high temperature ducts, substrates of the composite materials of which pores are filled with aluminum at a high pressure, and industrial catalysts and carriers.

The present invention is not limited to the embodiments set forth above and can be modified within the scope of the present invention as defined in the claims.

In the fifth embodiment, the burning machine includes two ovens for the degreasing/preliminary sintering step and the proper sintering step. However, these two steps can be achieved in an oven having two compartments divided by a wall. Further, the degreasing step can be eliminated from the burning machine.

The second to fourth embodiment also can be adapted to the fifth embodiment.

The sintering method in the fifth embodiment is applicable to a method of producing a continuous strip of a close metal plate and metal foil, other than the method of producing the sintered porous metal plate. Further, the sintering method is also applicable to a method of producing a long sintered body having a uniform cross section, such as a rod or pipe. Moreover the sintering method is also applicable to a method of producing a long sintered ceramic article.

In accordance with the fifth embodiment, a sintered porous metal plate having a large specific surface area and a large degree of freedom on the metal composition can be readily and stably obtained. Further, a long sintered article can be readily obtained in a powder metallurgy method and the like.

**Claims**

1. A method for making a porous metal plate comprising the steps of:

    a slurry preparation step for preparing a foamable slurry containing metal powder;
    a shaping step for shaping said foamable slurry into a plate article;
    a foaming step for foaming said plate article,
    thereby keeping the atmosphere at a humidity of 65% or more; and
    a drying step for drying said plate article after foaming,

    wherein in said slurry preparation step, a first aqueous solution containing a foaming agent, a surfactant and a water-soluble resinous binder, and a second aqueous solution containing metal powder and a water-soluble resinous binder are separately prepared, and the first aqueous solution and the second aqueous solution are mixed to prepare said foamable slurry just before said shaping step.

2. A method for making porous metal plate according to claim 1, wherein said method further comprises a burning step for degreasing said plate article after the drying step.

3. A method for making a porous metal plate according to claim 2, wherein said burning step includes a step for sintering said plate article.

4. A method for making a porous metal plate according to anyone of claims 1 to 3, wherein said foamable slurry is shaped by a doctor blade method in said shaping step.

5. A method for making a porous metal plate according to claim 4, wherein said doctor blade method uses a plurality of doctor blades which are separated from each other at a predetermined interval.

6. A method for making a porous metal plate according to anyone of claims 1 to 5, wherein said drying step is a far infrared irradiation drying step.

7. A method for making a porous metal plate according to anyone of the claims 1 to 6, wherein said shaping step performs shaping of the foamable plate article on a carrier sheet.

8. A method for making a porous metal plate according to claim 7, wherein prior to said shaping step, a releasing film which can burn off in the burning step is preliminarily provided on said carrier sheet.

9. A method for making a porous metal plate according to claim 8, wherein said releasing film comprises a polyurethane resin.

10. An apparatus for making a porous metal plate comprising:

    a slurry preparation means for preparing a foamable slurry containing at least metal powder, a foaming agent and a liquid medium;
a shaping means for shaping said foamable slurry fed from said slurry preparation means into a plate article;
a foaming means for foaming said plate article of said foamable slurry; and
a drying means for drying said cellular article; **characterised in that** these means are integrated in series by a transfer means comprising a continuous carrier sheet and said foaming means comprises a means for maintaining an atmosphere having a humidity of 65% or more.

11. An apparatus for making a porous metal plate according to claim 10, wherein a degreasing means is provided after said drying means for degreasing the dry plate article.

12. An apparatus for making a porous metal plate according to claim 11, wherein said degreasing means has a carrier sheet.

13. An apparatus for making a porous metal plate according to any of claims 11 or 12, wherein a proper sintering means is provided after said degreasing means for sintering the degreased plate article.

14. An apparatus for making a porous metal plate according to anyone of claims 10 to 13, wherein said shaping means comprises a plurality of doctor blades.

15. An apparatus for making a porous metal plate according to claim 14, wherein said doctor blade means comprises two doctor blades.

16. An apparatus for making a porous metal plate according to anyone of claims 10 to 15, wherein said slurry preparation means comprises a first aqueous solution mixing means for mixing a first aqueous solution containing the foaming agent, the surfactant, and the aqueous resinous binder; and a second aqueous solution mixing means for mixing a second aqueous solution containing the metal powder and the aqueous resionous binder, isolated from the first aqueous solution mixing means; and a third mixing means for preparing said foamable slurry by mixing said first aqueous solution and said second aqueous solution just before performing said shaping step.

17. An apparatus for making a porous metal place according to anyone of claims 10 to 16, wherein said shaping means comprises a slurry reservoir for holding for a short time said foamable slurry fed from said slurry preparation means, and an atomizing means of the liquid medium to prevent the surface of said foamable slurry from drying.

18. An apparatus for making a porous metal plate according to anyone of claims 10 to 17, wherein said foaming means comprises an oven having an inlet and an outlet surrounding the carriage path of said transfer means;

a water reservoir with a thermostat provided in said oven;
a heater for heating said shaped article provided along the carriage path in said oven, and
an anti-sweating heater provided on the oven inside wall.

19. An apparatus for making a porous metal plate according to anyone of claims 10 to 18, wherein said drying means comprises a far infrared irradiating means.

20. An apparatus for making a porous metal plate according to anyone of claims 10 to 19, wherein a releasing agent coating means is provided in form of said shaping means for forming a releasing agent film on said transfer means.

21. An apparatus for making a porous metal plate according to claim 20, wherein said releasing agent coating means comprises a doctor blade machine and a releasing agent drying machine.

22. An apparatus for making a porous metal plate according to anyone of claims 13 to 21, wherein said proper sintering means comprises a tunnel oven and a carrying member for continuously carrying said degreased plate article from said inlet to said outlet of said tunnel oven; said carrying member comprises a plurality of carriage rollers rotating in the carriage direction in at least a part of said tunnel oven.

23. An apparatus for making a porous metal plate according to claim 22, wherein said carriage rollers are controlled so that the rotation rate gradually decreases along the carriage direction.

20

**Patentansprüche**

1. Verfahren zur Herstellung einer porösen Metallplatte, umfassend die Schritte:

   einen Aufschlämmungs-Herstellungsschritt zur Herstellung einer Metallpulver enthaltenden schäumbaren Aufschlämmung;

   einen Formungsschritt zum Formen der schäumbaren Aufschlämmung zu einem Plattenformteil;

   einen Schäumungsschritt zum Schäumen des Plattenformteils,

   wobei die Atmosphäre bei einer Feuchtigkeit von 65 % oder mehr gehalten wird; und

   einen Trocknungsschritt zum Trocknen des Plattenformteils nach dem Schäumen,

   wobei im Aufschlämmungs-Herstellungsschritt eine erste wäßrige Lösung, enthaltend ein Schäumungsmittel, einen oberflächenaktiven Stoff und einen wasserlöslichen harzigen Binder, und eine zweite wäßrige Lösung, enthaltend Metallpulver und einen wasserlöslichen harzigen Binder, separat hergestellt werden und die erste wäßrige Lösung und die zweite wäßrige Lösung gemischt werden, um die schäumbare Aufschlämmung unmittelbar vor dem Formungsschritt herzustellen.

2. Verfahren zur Herstellung einer porösen Metallplatte nach Anspruch 1, wobei das Verfahren weiterhin einen Brennschritt zum Entfetten des Plattenformteils nach dem Trockenschritt umfaßt.

3. Verfahren zum Herstellen einer porösen Metallplatte nach Anspruch 2, wobei der Brennschritt einen Schritt zum Sintern des Plattenformteils beinhaltet.

4. Verfahren zur Herstellung einer porösen Metallplatte nach einem der Ansprüche 1 bis 3, wobei die schäumbare Aufschlämmung beim Formungsschritt mit einer Rakelmethode geformt wird.

5. Verfahren zur Herstellung einer porösen Metallplatte nach Anspruch 4, wobei die Rakelmethode eine Vielzahl von Rakeln verwendet, die voneinander in vorherbestimmten Abständen getrennt sind.

6. Verfahren zur Herstellung einer porösen Metallplatte nach einem der Ansprüche 1 bis 5, wobei der Trocknungsschritt ein Trocknungsschritt durch Bestrahlung mit Ferninfrarot ist.

7. Verfahren zur Herstellung einer porösen Metallplatte nach einem der Ansprüche 1 bis 6, wobei der Formungsschritt das Formen des schäumbaren Plattenformteils auf einer Trägerfolie erreicht.

8. Verfahren zur Herstellung einer porösen Metallplatte nach Anspruch 7, wobei vor dem Formungsschritt zunächst ein Trennfilm, der beim Brennschritt abbrennen kann, auf der Trägerfolie vorgesehen wird.

9. Verfahren zur Herstellung einer porösen Metallplatte nach Anspruch 8, wobei der Trennfilm ein Polyurethanharz umfaßt.

10. Apparatur zur Herstellung einer porösen Metallplatte, umfassend:

    ein Aufschlämmungs-Herstellungsmittel zur Herstellung einer schäumbaren Aufschlämmung, die mindestens Metallpulver, ein Schäumungsmittel und ein flüssiges Medium enthält;

    ein Formungsmittel zum Formen der schäumbaren Aufschlämmung, die aus dem Aufschlämmungs-Herstellungsmittel zugeführt wird, zu einem Plattenformteil;

    ein Schäumungsmittel zum Schäumen des Plattenformteils aus der schäumbaren Aufschlämmung; und

    ein Trocknungsmittel zum Trocknen des porösen Artikels; dadurch charakterisiert, daß diese Mittel in Reihe durch ein Transportmittel zusammengeschlossen sind, welches eine kontinuierliche Trägerfolie umfaßt, und das Schäumungsmittel ein Mittel zur Aufrechterhaltung einer Atmosphäre mit einer Feuchtigkeit von 65 % oder mehr umfaßt.

11. Apparatur zur Herstellung einer porösen Metallplatte nach Anspruch 10, wobei ein Entfettungsmittel nach dem Trocknungsmittel vorgesehen wird, um den trockenen Plattenformteil zu entfetten.

12. Apparatur zur Herstellung einer porösen Metallplatte nach Anspruch 11, wobei das Entfettungsmittel eine Trägerfolie aufweist.

13. Apparatur zur Herstellung einer porösen Metallplatte nach einem der Ansprüche 11 oder 12, wobei ein geeignetes Sintermittel nach dem Entfettungsmittel vorgesehen wird, um das entfettete Plattenformteil zu sintern.

14. Apparatur zur Herstellung einer porösen Metallplatte nach einem der Ansprüche 10 bis 13, wobei das Formungsmittel eine Mehrzahl von Rakeln umfaßt.

15. Apparatur zur Herstellung einer porösen Metallplatte nach Anspruch 14, wobei das Rakelmittel zwei Rakel umfaßt.

16. Apparatur zur Herstellung einer porösen Metallplatte nach einem der Ansprüche 10 bis 15, wobei das Aufschlämmungs-Herstellungsmittel ein Mittel zum Mischen der ersten wäßrigen Lösung zum Mischen einer ersten wäßrigen Lösung umfaßt, enthaltend das Schäumungsmittel, das oberflächenaktive Mittel und den wäßrigen harzigen Binder; und ein Mittel zum Mischen der zweiten wäßrigen Lösung zum Mischen einer zweiten wäßrigen Lösung, enthaltend das Metallpulver und den wäßrigen harzigen Binder, isoliert von Mittel zum Mischen der ersten wäßrigen Lösung; und ein drittes Mittel zum Mischen zur Herstellung der schäumbaren Aufschlämmung durch Mischen der ersten wäßrigen Lösung und der zweiten wäßrigen Lösung unmittelbar vor Durchführung des Formungsschritts.

17. Apparatur zur Herstellung einer porösen Metallplatte nach einem der Ansprüche 10 bis 17, wobei das Formungsmittel umfasst einen Aufschlämmungstank zur Aufbewahrung der schäumbaren Aufschlämmung, die aus dem Aufschlämmungs-Herstellungsmittel zugeführt wird, während einer kurzen Zeit,, und ein Atomisierungsmittel für das flüssige Medium zur Verhinderung des Trocknens der Oberfläche der schäumbaren Aufschlämmung umfaßt.

18. Apparatur zur Herstellung einer porösen Metallplatte nach einem der Ansprüche 10 bis 17, wobei das Schäumungsmittel einen Ofen mit einem Einlaß und einem Auslaß umfaßt, der den Bewegungsweg des Transportmittels umgibt;

    einen Wasserbehälter mit einem Thermostat, der im Ofen vorgesehen ist;

    eine Heizvorrichtung zum Erhitzen des Formteils, der entlang des Bewegungswegs im Ofen vorgesehen ist, und

    einen Anti-Schwitzwasser-Erhitzer, der an der Ofeninnenwand vorgesehen ist.

19. Apparatur zur Herstellung einer porösen Metallplatte nach einem der Ansprüche 10 bis 18, wobei das Trocknungsmittel ein Mittel zur Bestrahlung mit Ferninfrarot umfaßt.

20. Apparatur zur Herstellung einer porösen Metallplatte nach einem der Ansprüche 10 bis 19, wobei ein Mittel zum Auftragen eines Trennmittels im Formungsmittel vorgesehen ist, um einen Trennmittelfilm auf dem Transportmittel zu bilden.

21. Apparatur zur Herstellung einer porösen Metallplatte nach Anspruch 20, wobei das Mittel zum Auftragen des Trennmittels eine Rakelmaschine und eine Trennmittel-Trocknungsmaschine umfaßt.

22. Apparatur zur Herstellung einer porösen Metallplatte nach einem der Ansprüche 13 bis 21, wobei das geeignete Sintermittel einen Tunnelofen und eine Tragevorrichtung zum kontinuierlichen Fortbewegen des entfetteten Plattenformteils vom Einlaß zum Auslaß des Tunnelofens umfaßt; das Tragemittel, in mindestens einem Teil des Tunnelofens eine Vielzahl von Transportwalzen umfaßt, die in der Transportrichtung rotieren.

23. Apparatur zur Herstellung einer porösen Metallplatte nach Anspruch 22, wobei die Transportwalzen so kontrolliert sind, daß die Rotationsgeschwindigkeit entlang der Transportrichtung allmählich abnimmt.

**EP 0 765 704 B1**

**Revendications**

1. Procédé de fabrication d'une plaque métallique poreuse comprenant les étapes suivantes :

   ♦ une étape de préparation de la suspension pour préparer une suspension moussable contenant une poudre métallique ;

   ♦ une étape de façonnage pour façonner ladite suspension moussable sous forme d'article de type plaque ;

   ♦ une étape de moussage pour mousser ledit article de type plaque, en maintenant ainsi l'atmosphère à une humidité de 65% ou plus ; et

   ♦ une étape de séchage pour sécher ledit article de type plaque après moussage,

   dans lequel, dans ladite étape de préparation de la suspension, une première solution aqueuse contenant un agent moussant, un tensioactif et un liant résineux soluble dans l'eau, et une seconde solution aqueuse contenant une poudre métallique et un liant résineux soluble dans l'eau sont préparées séparément, puis la première solution aqueuse et la seconde solution aqueuse sont mélangées pour préparer ladite suspension moussable juste avant ladite étape de façonnage.

2. Procédé de fabrication d'une plaque métallique poreuse selon la revendication 1, lequel procédé comprend en outre une étape de cuisson pour dégraisser ledit article de type plaque après l'étape de séchage.

3. Procédé de fabrication d'une plaque métallique poreuse selon la revendication 2, dans lequel ladite étape de cuisson comprend une étape pour fritter ledit article de type plaque.

4. Procédé de fabrication d'une plaque métallique poreuse selon l'une quelconque des revendications 1 à 3, dans lequel ladite suspension moussable est façonnée par un procédé à racles dans ladite étape de façonnage.

5. Procédé de fabrication d'une plaque métallique poreuse selon la revendication 4, dans lequel ledit procédé à racles utilise plusieurs racles séparées les unes des autres à un intervalle prédéterminé.

6. Procédé de fabrication d'une plaque métallique poreuse selon l'une quelconque des revendications 1 à 5, dans lequel ladite étape de séchage est une étape de séchage par rayonnement dans l'infrarouge lointain.

7. Procédé de fabrication d'une plaque métallique poreuse selon l'une quelconque des revendications 1 à 6, dans lequel ladite étape de façonnage effectue le façonnage de l'article de type plaque moussable sur une feuille support.

8. Procédé de fabrication d'une plaque métallique poreuse selon la revendication 7, dans lequel, avant ladite étape de façonnage, un film anti-adhésif pouvant être éliminé lors de l'étape de cuisson est déposé au préalable sur ladite feuille support.

9. Procédé de fabrication d'une plaque métallique poreuse selon la revendication 8, dans lequel ledit film anti-adhésif comprend une résine de polyuréthanne.

10. Appareil pour fabriquer une plaque métallique poreuse comprenant :

    ♦ un moyen de préparation de la suspension pour préparer une suspension moussable contenant au moins une poudre métallique, un agent moussant et un milieu liquide ;

    ♦ des moyens de façonnage pour façonner ladite suspension moussable en provenance dudit moyen de préparation de la suspension sous forme d'article de type plaque ;

    ♦ des moyens de moussage pour mousser ledit article de type plaque constitué de ladite suspension moussable ; et

    ♦ des moyens de séchage pour sécher ledit article alvéolaire ;

**caractérisé en ce que** ces moyens sont intégrés en série par un moyen de transfert comprenant une feuille support continue et lesdits moyens de moussage comprennent un moyen pour maintenir une atmosphère ayant une humidité de 65% ou plus.

**11.** Appareil pour fabriquer une plaque métallique poreuse selon la revendication 10, dans lequel des moyens de dégraissage sont prévus après lesdits moyens de séchage pour dégraisser l'article de type plaque sec.

**12.** Appareil pour fabriquer une plaque métallique poreuse selon la revendication 11, dans lequel lesdits moyens de dégraissage possèdent une feuille support.

**13.** Appareil pour fabriquer une plaque métallique poreuse selon l'une quelconque des revendications 11 ou 12, dans lequel des moyens de frittage appropriés sont prévus après lesdits moyens de dégraissage pour fritter l'article de type plaque dégraissé.

**14.** Appareil pour fabriquer une plaque métallique poreuse selon l'une quelconque des revendications 10 à 13, dans lequel lesdits moyens de façonnage comprennent plusieurs racles.

**15.** Appareil pour fabriquer une plaque métallique poreuse selon la revendication 14, dans lequel lesdits moyens à racles comprennent deux racles.

**16.** Appareil pour fabriquer une plaque métallique poreuse selon l'une quelconque des revendications 10 à 15, dans lequel ledit moyen de préparation de la suspension comprend un premier moyen de mélange d'une solution aqueuse pour mélanger une première solution aqueuse contenant l'agent moussant, le tensioactif, et le liant résineux aqueux ; et un deuxième moyen de mélange d'une solution aqueuse pour mélanger une seconde solution aqueuse contenant la poudre métallique et le liant résineux aqueux, isolé du moyen de mélange de la première solution aqueuse ; et un troisième moyen de mélange pour préparer ladite suspension moussable en mélangeant ladite première solution aqueuse et ladite seconde solution aqueuse juste avant d'effectuer ladite étape de façonnage.

**17.** Appareil pour fabriquer une plaque métallique poreuse selon l'une quelconque des revendications 10 à 16, dans lequel lesdits moyens de façonnage comprennent un réservoir à suspension pour conserver pendant une courte période ladite suspension moussable en provenance desdits moyens de préparation de la suspension, et des moyens de pulvérisation du milieu liquide pour éviter que la surface de ladite suspension moussable ne sèche.

**18.** Appareil pour fabriquer une plaque métallique poreuse selon l'une quelconque des revendications 10 à 17, dans lequel lesdits moyens de moussage comprennent un four ayant une entrée et une sortie entourant le trajet de transport desdits moyens de transfert ;

   ♦ un réservoir d'eau avec un thermostat installé dans ledit four ;

   ♦ un élément chauffant pour chauffer ledit article façonné prévu le long du trajet d'avancement dans ledit four, et

   ♦ un élément chauffant anti-ressuage installé dans la paroi interne du four.

**19.** Appareil pour fabriquer une plaque métallique poreuse selon l'une quelconque des revendications 10 à 18, dans lequel lesdits moyens de séchage comprennent un moyen de rayonnement dans l'infrarouge lointain.

**20.** Appareil pour fabriquer une plaque métallique poreuse selon l'une quelconque des revendications 10 à 19, dans lequel des moyens de revêtement d'un agent anti-adhésif sont prévus sous forme de moyens de façonnage pour former un film d'agent anti-adhésif sur lesdits moyens de transfert.

**21.** Appareil pour fabriquer une plaque métallique poreuse selon la revendication 20, dans lequel lesdits moyens de revêtement de l'agent anti-adhésif comprennent une machine à racles et une machine de séchage de l'agent anti-adhésif.

**22.** Appareil pour fabriquer une plaque métallique poreuse selon l'une quelconque des revendications 13 à 21, dans lequel lesdits moyens de frittage appropriés comprennent un four tunnel et un élément de transport pour transporter en continu ledit article de type plaque dégraissé de ladite entrée à ladite sortie dudit four tunnel ; ledit élément de transport comprend plusieurs galets de transport tournant dans le sens du transport dans au moins une partie dudit four tunnel.

23. Appareil pour fabriquer une plaque métallique poreuse selon la revendication 22, dans lequel lesdits galets de transport sont commandés de façon à ce que le taux de rotation diminue progressivement dans le sens du transport.

FIG. 1

EP 0 765 704 B1

# FIG. 2

```
┌─────────────────────────────────────────┐
│       RELEASING FILM FORMATION           │
└─────────────────────────────────────────┘
                    │
┌─────────────────────────────────────────┐
│        RELEASING FILM DRYING             │
└─────────────────────────────────────────┘
                    │
┌─────────────────────────────────────────────────┐
│  FOAMABLE SLURRY PREPARATION AND SHAPING         │
└─────────────────────────────────────────────────┘
                    │
          ┌───────────────────┐
          │     FOAMING       │
          └───────────────────┘
                    │
          ┌───────────────────┐
          │     DRYING        │
          └───────────────────┘
                    │
          ┌───────────────────┐
          │     CUTTING       │
          └───────────────────┘
```

FIG. 3

FIG. 4

FIG. 5A

FIG. 5B

FIG. 5C

FIG. 5D

FIG. 5E

FIG. 6A

1A

FIG. 6B

FIG. 6C

3

FIG. 6D

1B

3

FIG. 6E

1B

4

FIG. 7

EP 0 765 704 B1

FIG. 8

FIG. 9A

FIG. 9B

FIG. 9C

FIG. 9D

FIG. 10

FIG. 11

EP 0 765 704 B1

# FIG. 12

RELEASING FILM FORMATION

RELEASING FILM DRYING

FOAMING SLURRY PREPARATION AND SHAPING

FOAMING

DRYING

DEGREASING

SINTERING

FIG. 13